# EUROPEAN PATENT SPECIFICATION

(11) **EP 4 492 752 B1**
(45) Date of publication and mention of the grant of the patent: **14.10.2026**
(21) Application number: 22934152.4
(22) Date of filing: 31.03.2022
(51) Int. Cl.: H04L 67/00, H04L 9/00, H04L 9/40, H04L 9/08, H04L 67/12

(54) **SECURITY INSPECTION METHOD AND APPARATUS, AND VEHICLE**
SICHERHEITSINSPEKTIONSVERFAHREN UND -VORRICHTUNG SOWIE FAHRZEUG
PROCÉDÉ ET APPAREIL D'INSPECTION DE SÉCURITÉ, ET VÉHICULE

(43) Date of publication of application: 15.01.2025
(60) Divisional application: 26203929.0
(73) Proprietor: Yinwang Intelligent Technologies Co., Ltd., Shenzhen, Guangdong 518129 (CN)
(72) Inventor: WANG, Chenyu, Shenzhen, Guangdong 518129 (CN); WU, Yongzheng, Shenzhen, Guangdong 518129 (CN); WEI, Zhuo, Shenzhen, Guangdong 518129 (CN)
(74) Representative: Gill Jennings & Every LLP
(86) International application number: PCT/CN2022/084290
(87) International publication number: WO 2023/184303

(56) References cited:
- WO-A1-2019/124976
- WO-A1-2022/056882
- CN-A- 105 141 604
- CN-A- 108 183 886
- CN-A- 110 572 412
- CN-A- 111 274 583
- CN-A- 112 491 784
- CN-A- 112 491 917
- US-A1- 2018 262 466
- US-A1- 2020 143 053
- US-B1- 10 673 880

## Description

### TECHNICAL FIELD

Embodiments of this application relate to the security field, and more specifically, to a security detection method and apparatus, and a vehicle.

### BACKGROUND

Onboard communication security is one of key attributes of vehicles in the future, and is a safety barrier for ensuring life safety of passengers. Some security threats may cause a security accident. For example, when a vehicle-mounted sensor is maliciously replaced by an attacker, and incorrect data is transferred to a central computer (central computer) or a vehicle-mounted actuator, a vehicle may be caused to perform a dangerous action.

Currently, to implement fast forwarding of data from one node to another node, a node that forwards the data may not perform security detection on the data. If this part of undetected data poses a security threat, vehicle security may be threatened.

US 2020/143053 A1 describes methods and arrangements for multi-layer in-vehicle network intrusion detection and characterization.

WO 2022/056882 A1 describes an intrusion monitoring system which includes CAN and Ethernet monitors and a control component for attack detection.

### SUMMARY

Embodiments of this application provide a security detection method and apparatus, and a vehicle, to help improve security performance of a vehicle. The present invention is defined by the features disclosed in the independent claims. Additional embodiments are defined in the dependent claims.

A vehicle (sometimes referred to as a car for short) in this application is a vehicle in a broad sense, and may be a transport means (for example, an automobile, a truck, a motorcycle, a train, an airplane, or a ship), an industrial vehicle (for example, a pallet truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not limited in embodiments of this application.

According to a first aspect, a security detection method is provided, including: obtaining a first data packet; inputting the first data packet into a first security detection apparatus for security detection, to obtain a first security detection result; obtaining a second data packet and inputting the second data packet into a second security detection apparatus for security detection if the first security detection result indicates that the first data packet poses a security threat, to obtain a second security detection result; and forwarding the second data packet or executing a first security instruction based on the second security detection result.

In embodiments of this application, the first security detection apparatus can perform security detection on the first data packet. When the first security detection result indicates that the first data packet poses the security threat, the second security detection apparatus can perform security detection on the second data packet. This can implement multi-level detection on a security threat of a data packet, and help reduce a security risk caused when a single security detection apparatus performs security detection, thereby helping improve security performance of a vehicle.

In some possible implementations, the first data packet may be a to-be-fast-forwarded data packet.

In embodiments of this application, the vehicle can perform security detection on the to-be-fast-forwarded first data packet via the first security detection apparatus. If the first data packet poses the security threat, the vehicle can perform security detection on the second data packet via the second security detection apparatus. When fast forwarding efficiency is ensured, this helps reduce a security hazard caused by fast data forwarding.

In some possible implementations, the first data packet is a part or all of data packets that are obtained in a first time period and on which security detection is to be performed, and the first data packet is a to-be-fast-forwarded data packet. When the first data packet is the part of the data packets, higher fast forwarding efficiency can be ensured. When the first data packet is all of the data packets, a larger detection range can be covered to improve security. The second data packet is all of data packets that are obtained in a second time period and on which security detection is to be performed. The first time period is before the second time period.

In embodiments of this application, when the to-be-fast-forwarded first data packet poses the security threat, all the data packets that are obtained in the second time period and on which security detection is to be performed can be input into the second security detection apparatus for security detection. This helps reduce the security risk when the single security detection apparatus performs security detection on the data packet, thereby helping improving safety performance of the vehicle.

In some possible implementations, when the first data packet is a part of data packets that are obtained in a first time period and on which security detection is to be performed, security detection can be performed by the second security detection apparatus on another part (for example, a third data packet) of the data packets that are obtained in the first time period and on which security detection is to be performed.

The data packets that are obtained in the first time period and on which security detection is to be performed includes the first data packet and the third data packet.

The security detection can be performed by the first security detection apparatus on the first data packet that is in the first time period, and security detection can be performed by the second security detection apparatus on the third data packet. In this way, the second security detection apparatus can ignore the first data packet detected by the first security detection apparatus. This helps improve efficiency of performing security detection on the data packet by the second security detection apparatus. When the first data packet poses the security threat, security detection can be performed by the second security detection apparatus on all data packets that are in a second time period and on which security detection is to be performed. This can compensate for a disadvantage of performing security detection by the first security detection apparatus.

A detection capability of the second security detection apparatus is higher than a detection capability of the first security detection apparatus. A detection speed of the first security detection apparatus is higher than a detection speed of the second security detection apparatus.

For example, the second security detection apparatus is a detection apparatus that performs security detection via software, and the first security detection apparatus is a detection apparatus that performs security detection via hardware. The second security detection apparatus may be located in the vehicle, or may be located in a cloud server.

In this way, when fast forwarding is performed on the first data packet, faster security detection can be implanted by the first security detection apparatus on the first data packet. Because the third data packet in the first time period can be a data packet that does not need to be fast forwarded, more accurate security detection can be implemented by the second security detection apparatus on the third data packet. When a security vulnerability caused by fast data forwarding is fixed, security detection on the third data packet is performed by the second security detection apparatus, and security detection on the first data packet is performed by the first security detection apparatus. This can implement a balance between hardware costs and security.

In some possible implementations, the data packets that are obtained in the first time period and on which security detection is to be performed may include the first data packet, a third data packet, and a fourth data packet.

The first data packet may be a to-be-fast-forwarded data packet. The third data packet and the fourth data packet are data packets that do not need to be fast forwarded. Security detection may be performed by the first security detection apparatus on the first data packet. Security detection may be performed by the second security detection apparatus on the third data packet. Security detection may be performed by a third security detection apparatus on the fourth data packet.

In this way, when fast forwarding is performed on the first data packet, faster security detection can be implanted by the first security detection apparatus on the first data packet. In addition, security detection can be performed by the second security detection apparatus and the third security detection apparatus separately on the third data packet and the fourth data packet. This helps improve efficiency of security detection on the data packet.

For example, a detection capability of the third security detection apparatus is higher than a detection capability of the second security detection apparatus.

For example, the first security detection apparatus and the second security detection apparatus may be located in the vehicle, and the third security detection apparatus may be located in a cloud server.

In some possible implementations, compared with the third data packet, the fourth data packet may be a data packet that has a higher requirement on accuracy of a security detection result.

As a result, security detection is performed by the third security detection apparatus with a higher detection capability on the fourth data packet that has the higher requirement on accuracy of the security detection result. This ensures accuracy of a detection result of the fourth data packet, and further improves security performance of the vehicle.

The foregoing merely uses, for description, an example in which security detection is performed by the first security detection apparatus, by the first security detection apparatus and the second security detection apparatus, or by the first security detection apparatus, the second security detection apparatus, and the third security detection apparatus on the data packets that are obtained in the first time period and on which security detection is to be performed. Embodiments of this application are not limited thereto. Security detection may alternatively be performed by a larger quantity (for example, four or more) of security detection apparatuses on the data packets that are obtained in the first time period and on which security detection is to be performed.

In some possible implementations, the first security instruction is for controlling the vehicle to perform a security operation. For example, the first instruction may be for controlling the vehicle to safely stop; the first instruction may be for controlling a vehicle speed of the vehicle to decrease to a preset speed threshold or below a preset speed threshold; or if the vehicle is in an autonomous driving state, the first security instruction may be for prompting a user to take over the vehicle.

In some possible implementations, the second data packet includes a data packet that poses a security threat in the first data packet.

With reference to the first aspect, in some implementations of the first aspect, the forwarding the second data packet or executing a first security instruction based on the second security detection result includes: sending the second data packet to a first server if the second security detection result indicates that the second data packet poses a security threat; receiving a third security detection result sent by the first server, where the third security detection result indicates whether the second data packet poses the security threat; and forwarding the second data packet or executing the first security instruction based on the third security detection result.

In embodiments of this application, the vehicle can send the second data packet to the first server and receive the security detection result of the second data packet from the first server. Security detection is performed on the data packet in a vehicle-cloud collaboration manner, to help improve efficiency and accuracy of security detection on the data packet.

In some possible implementations, the first server may be a physical server, or may be a virtual server.

With reference to the first aspect, in some implementations of the first aspect, the forwarding the second data packet or executing the first security instruction based on the third security detection result includes: forwarding the second data packet if the third security detection result indicates that the second data packet does not pose the security threat; or executing the first security instruction if the third security detection result indicates that the second data packet poses the security threat.

In embodiments of this application, the vehicle can determine, based on the third security detection result indicated by the first server, to forward the second data packet or execute the first security instruction. The vehicle can forward the second data packet when the third security detection result indicates that the second data packet does not pose the security threat. This helps implement fast and secure forwarding of the second data packet. The vehicle can execute the first security instruction when the third security detection result indicates that the second data packet poses the security threat. This helps improve security performance of the vehicle.

With reference to the first aspect, in some implementations of the first aspect, the forwarding the second data packet or executing a first security instruction based on the second security detection result includes: forwarding the second data packet if the second security detection result indicates that the second data packet does not pose a security threat; or executing the first security instruction if the second security detection result indicates that the second data packet poses a security threat.

In embodiments of this application, in a manner in which the first security detection apparatus collaborates with the second security detection apparatus, when the first security detection apparatus detects that the first data packet poses the security threat, the second data packet can be input into the second security detection apparatus for security detection. Collaborative detection is performed by different security detection apparatuses in the vehicle. This helps improve accuracy of security detection on the data packet, thereby helping improve security performance of the vehicle.

With reference to the first aspect, in some implementations of the first aspect, the first security detection apparatus includes a rule library, and a security detection rule is stored in the rule library. The method further includes: receiving security detection rule update information sent by a second server; and updating the security detection rule in the rule library based on the security detection rule update information.

In embodiments of this application, the second server can update the security detection rule in the rule library of the first security detection apparatus. In this way, the second server can update the security detection rule in the vehicle in real time. As a result, the security detection rule updated in real time in the vehicle can cope with changing security threats. This helps improve security performance of the vehicle.

In some possible implementations, the second server may be a physical server, or may be a virtual server.

In some possible implementations, the first server and the second server may be different servers, or may be a same server.

With reference to the first aspect, in some implementations of the first aspect, the obtaining a first data packet includes: obtaining the first data packet and the third data packet in the first time period. The method further includes: inputting the third data packet into the second security detection apparatus for security detection, to obtain a fourth security detection result; and forwarding the third data packet or executing a second security instruction based on the fourth security detection result.

In embodiments of this application, security detection can be performed by the first security detection apparatus on the part of the data packets that are in the first time period, and security detection can be performed by the second security detection apparatus on the another part of the data packets. In this way, the second security detection apparatus can ignore security detection on the part of data packets. This helps improve efficiency of performing security detection on a data packet by the second security detection apparatus. When the first data packet poses the security threat, security detection can be performed by the second security detection apparatus on all the data packets that are in the second time period and on which security detection is to be performed. This can compensate for a disadvantage of performing security detection by the first security detection apparatus.

In some possible implementations, the second security instruction is for controlling the vehicle to perform the security operation. For example, the second instruction may be for controlling the vehicle to safely stop; the second instruction may be for controlling the vehicle speed of the vehicle to decrease to the preset speed threshold or below the preset speed threshold; or if the vehicle is in the autonomous driving state, the second security instruction may be for prompting the user to take over the vehicle.

With reference to the first aspect, in some implementations of the first aspect, the method further includes: forwarding the first data packet.

In embodiments of this application, the first data packet can be forwarded after security detection is performed by the first security detection apparatus on the first data packet. This can implement fast forwarding of the data packet by a data forwarding node.

With reference to the first aspect, in some implementations of the first aspect, the first security detection apparatus is a first intrusion detection system (intrusion detection system, IDS) or a first intrusion detection and prevention system (intrusion detection and prevention system, IDPS), and/or the second security detection apparatus is a second IDS or a second IDPS.

With reference to the first aspect, in some implementations of the first aspect, the first security detection apparatus is located in a field programmable gate array (field programmable gate array, FPGA), and/or the second security detection apparatus is located in a microcontroller unit (microcontroller unit, MCU).

The technical solutions in embodiments of this application can be applied to a zonal architecture. The first security detection apparatus and the second security detection apparatus are deployed in a zonal controller. Therefore, a framework in which the first security detection apparatus and the second security detection apparatus collaboratively perform security detection on the data packet can be implemented. As a result, when determining that the data packet poses the security threat or being unable to determine whether the data packet poses the security threat, the first security detection apparatus in the FPGA sends a warning signal to the MCU. The MCU can perform security detection on the second data packet. This helps improve efficiency and accuracy of security detection on the data packet.

With reference to the first aspect, in some implementations of the first aspect, the first security detection apparatus is located in a fast forwarding engine, and/or the second security detection apparatus runs on a main application core.

In embodiments of this application, the first security detection apparatus and the second security detection apparatus may be located in a gateway chip. The first security detection apparatus is integrated, as an intellectual property core (intellectual property core, IP core), into a system on a chip (system-on-a-chip, SOC) together with a data forwarding engine, and is connected to the main application core through a bus. When detecting a data packet that poses a security threat, the first security detection apparatus can directly send a signal of the security threat to the main application core through the bus. This helps reduce response duration of the main application core. In addition, the systems are integrated into a same SoC. This can reduce additional hardware device overheads, thereby reducing hardware costs.

According to a second aspect, a security detection apparatus is provided. The apparatus includes: an obtaining unit, configured to obtain a first data packet; a first security detection unit, configured to input the first data packet into a first security detection apparatus for security detection, to obtain a first security detection result, where the obtaining unit is further configured to obtain a second data packet if the first security detection result indicates that the first data packet poses a security threat; a second security detection unit, configured to input the second data packet into a second security detection apparatus for security detection, to obtain a second security detection result; and a processing unit, configured to forward the second data packet or execute a first security instruction based on the second security detection result.

With reference to the second aspect, in some implementations of the second aspect, the apparatus further includes a sending unit and a receiving unit. The processing unit is specifically configured to: if the second security detection result indicates that the second data packet poses a security threat, control the sending unit to send the second data packet to a first server; control the receiving unit to receive a third security detection result sent by the first server, where the third security detection result indicates whether the second data packet poses the security threat; and forward the second data packet or execute the first security instruction based on the third security detection result.

With reference to the second aspect, in some implementations of the second aspect, the processing unit is specifically configured to: if the third security detection result indicates that the second data packet does not pose the security threat, control the sending unit to forward the second data packet; or execute the first security instruction if the third security detection result indicates that the second data packet poses the security threat.

With reference to the second aspect, in some implementations of the second aspect, the apparatus further includes a sending unit. The processing unit is specifically configured to: if the second security detection result indicates that the second data packet does not pose a security threat, control the sending unit to forward the second data packet; or execute the first security instruction if the second security detection result indicates that the second data packet poses a security threat.

With reference to the second aspect, in some implementations of the second aspect, the first security detection apparatus includes a rule library, and a security detection rule is stored in the rule library. The processing unit is further configured to update the security detection rule in the rule library based on security detection rule update information sent by a second server.

The obtaining unit is specifically configured to obtain the first data packet and a third data packet in a first time period. The second security detection unit is further configured to: input the third data packet into the second security detection apparatus for security detection, to obtain a fourth security detection result; and forward the third data packet or execute a second security instruction based on the fourth security detection result.

With reference to the second aspect, in some implementations of the second aspect, the apparatus further includes the sending unit. The sending unit is configured to forward the first data packet.

With reference to the second aspect, in some implementations of the second aspect, the first security detection apparatus is a first intrusion detection system IDS or a first intrusion detection and prevention system IDPS, and/or the second security detection apparatus is a second IDS or a second IDPS.

With reference to the second aspect, in some implementations of the second aspect, the first security detection apparatus is located in a field programmable gate array FPGA, and/or the second security detection apparatus is located in a microcontroller unit MCU.

With reference to the second aspect, in some implementations of the second aspect, the first security detection apparatus is located in a fast forwarding engine, and/or the second security detection apparatus runs on a main application core.

According to a sixth aspect, a computer-readable medium is provided. The computer-readable medium stores program code. When the computer program code is run on a computer, the computer is enabled to perform the method according to the first aspect.

### BRIEF DESCRIPTION OF DRAWINGS

FIG. 1 is a functional block diagram of a vehicle according to an embodiment of this application;
FIG. 2 is a diagram of two vehicle architectures according to an embodiment of this application;
FIG. 3 is a diagram of performing security detection on a data packet according to an embodiment of this application;
FIG. 4 is another diagram of performing security detection on a data packet according to an embodiment of this application;
FIG. 5 is another diagram of a zonal architecture according to an embodiment of this application;
FIG. 6 is a diagram of a collaboration relationship between an FPGA and an MCU in a VIU according to an embodiment of this application;
FIG. 7 is a block diagram of a structure of a parallel processing unit according to an embodiment of this application;
FIG. 8 is a diagram of a security detection system according to an embodiment of this application;
FIG. 9A and FIG. 9B are a schematic flowchart of a security detection method according to an embodiment of this application;
FIG. 10 is another diagram of performing security detection by an FPGA and an MCU according to an embodiment of this application;
FIG. 11 is another diagram of a security detection system according to an embodiment of this application;
FIG. 12A, FIG. 12B, and FIG. 12C are another schematic flowchart of a security detection method according to an embodiment of this application;
FIG. 13 is a diagram of a gateway chip according to an embodiment of this application;
FIG. 14 is another schematic flowchart of a security detection method according to an embodiment of this application;
FIG. 15 is a block diagram of a security detection apparatus according to an embodiment of this application; and
FIG. 16 is a block diagram of an apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

Prefix words such as "first" and "second" in embodiments of this application are merely intended to distinguish between different described objects, and impose no limitation on locations, rankings, priorities, quantities, content, or the like of the described objects. For example, the quantity of the described objects is not limited by an ordinal number. There may be one or more described objects. A "first security detection apparatus" is used as an example. There may be one or more "security detection apparatuses". In addition, objects modified by different prefix words may be the same or different. For example, if the described object is the "security detection apparatus", the "first security detection apparatus" and a "second security detection apparatus" may be security detection apparatuses of a same type or security detection apparatuses of different types. For another example, if the described object is a "data packet", a "first data packet" and a "second data packet" may be data packets with same content or data packets with different content. In conclusion, in embodiments of this application, use of the prefix words used to distinguish between the described objects, such as the ordinal numbers, constitutes no limitation on the described objects. For descriptions of the described object, refer to context descriptions in claims or embodiments. Use of the prefix words should not constitute a redundant limitation. In addition, in the descriptions of embodiments, unless otherwise specified, "a plurality of" means two or more.

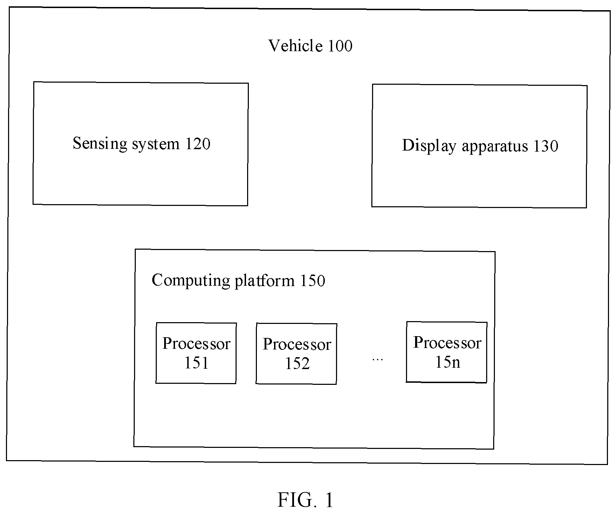

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an environment around the vehicle 100. For example, the sensing system 120 may include a positioning system. The positioning system may be a global positioning system (global positioning system, GPS), or may be a BeiDou system or another positioning system, for example, an inertial measurement unit (inertial measurement unit, IMU). For another example, the sensing system 120 may include one or more of a lidar, a millimeter wave radar, an ultrasonic radar, and a photographing apparatus.

Some or all of functions of the vehicle 100 may be controlled by the computing platform 150. The computing platform 150 may include processors 151 to 15n (n is a positive integer). The processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit, for example, a field programmable gate array FPGA, implemented by a programmable logic device (programmable logic device, PLD). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU). In addition, the computing platform 150 may further include a memory. The memory is configured to store instructions. Some or all of the processors 151 to 15n may invoke the instructions in the memory, and execute the instructions, to implement a corresponding function.

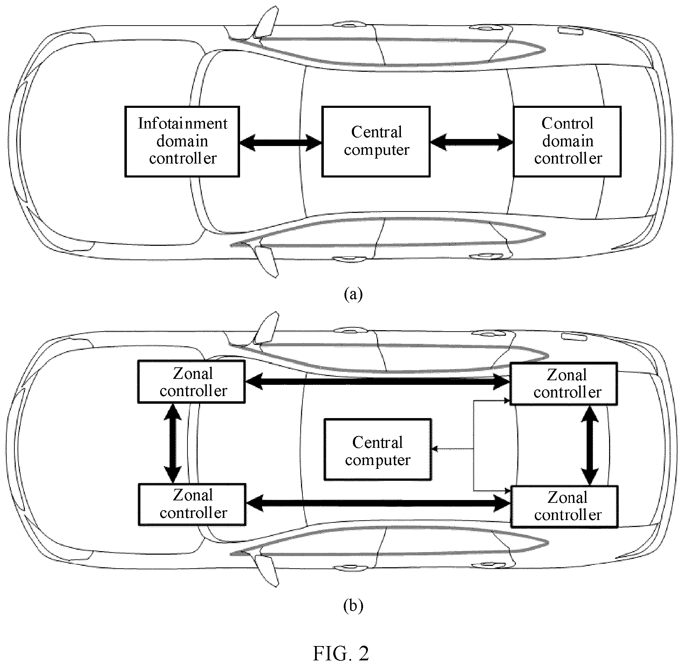

FIG. 2 is a diagram of two vehicle architectures according to an embodiment of this application. Herein, (a) in FIG. 2 is a diagram of a domain architecture (domain architecture). A feature of the domain architecture is that an operation processing unit comprises a central computer (central computer) and a domain controller (domain controller). Different domain controllers are classified based on dedicated functions, for example, an infotainment domain controller (infotainment domain controller) that controls an in-vehicle infotainment system and a control domain controller (control domain controller) that controls a running status of a vehicle body. Different domain controllers may be connected to sensors and actuators that have different functions. When the vehicle runs, the central computer receives a signal and sends an instruction via different domain controllers.

Herein, (b) in FIG. 2 is a diagram of a zonal architecture (zonal architecture). A feature of the zonal architecture is that an operation processing unit is divided into a central computer and a zonal controller (zonal controller). A vehicle-mounted sensor and an actuator are allocated to different zonal controllers based on zones in which positions of the vehicle-mounted sensor and the actuator are located. For example, a zonal controller in the left front of the vehicle may be connected to a sensor and a control actuator that are deployed in a left front area of the vehicle. Compared with the domain architecture, the zonal architecture is more suitable for a development trend of electrification. In one aspect, cabling costs caused by an increase of sensors and an increase of actuators can be greatly reduced. In another aspect, communication between different domains may no longer depend on the central computer for forwarding. Fast forwarding can be performed between different functional domains through a ring network structure including the zonal controller, to reduce a data transmission delay.

The technical solutions in embodiments of this application are applicable to the foregoing two vehicle architectures, but are not limited to being applicable to the foregoing two vehicle architectures.

Onboard communication security is one of key attributes of vehicles in the future, and is a safety barrier for ensuring life safety of passengers. Common security threats include: (1) The central computer or an infotainment domain user interface is attacked by an attacker, where the attacker may forge a malicious data packet to send a malicious command to a vehicle body controller, resulting in a security accident. (2) The vehicle-mounted sensor is maliciously replaced by the attacker, and incorrect data is transferred to the central computer or the vehicle-mounted actuator, causing the vehicle to perform a dangerous action.

To ensure onboard communication security, an intrusion detection system IDS or an intrusion detection and prevention system IDPS may be deployed in the vehicle. The IDS is a network security apparatus, and may generate a warning for attack behavior. The IDPS is a network security apparatus, and may actively and automatically block the attack behavior. As shown in (a) in FIG. 2, in the domain architecture, the IDS or the IDPS is usually deployed on the central computer and/or a domain processor. As shown in (b) in FIG. 2, in the zonal architecture, the IDS or the IDPS is usually deployed on the central computer and/or the zonal controller.

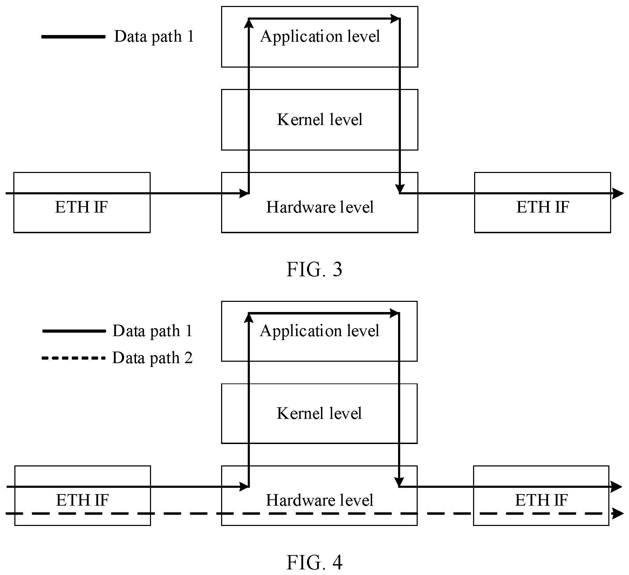

FIG. 3 is a diagram of performing security detection on a data packet according to an embodiment of this application. Usually, the IDS or the IDPS is deployed at an application level (application level) and/or a kernel level (kernel level). The data packet is received through an ethernet interface (ethernet interface, ETH IF), and the data packet may be transmitted through a data path 1 (data path 1). The data packet transmitted through the data path 1 is parsed into a digital signal at a hardware level (hardware level) through a network interface. Then, the IDS (or the IDPS) at the application level or the kernel level decapsulates the data packet, and then parses a payload in the data packet, to identify a security threat of the data packet according to a specific rule. If the data packet does not pose the security threat, the data packet continues to be forwarded to a next node through the ETH IF.

As described above, a feature of the zonal architecture is that data packets exchanged between different zones are forwarded by the zonal controller instead of the central computer. FIG. 4 is another diagram of performing security detection on the data packet according to an embodiment of this application. To further enhance this feature, a hardware-based fast forwarding engine (fast forwarding engine) is added to the zonal controller. FPGA-based hardware control logic is used, so that a part of the data packets are directly forwarded at the hardware level instead of passing through the application level and the kernel level. A part of the data packets may be transmitted through the data path 1, and another part of the data packets may be transmitted through a data path 2 (data path 2). In terms of a data transmission delay, the hardware-based fast forwarding engine implements fast data forwarding of the data packets on the data path 2. This saves software processing duration at the application level and the kernel level, and reduces forwarding duration of the data packets. However, in terms of security, in this design, the data packets transmitted through the data path 2 are invisible to the IDS (or the IDPS) located at the application level and the kernel level, and the IDS (or the IDPS) cannot perform security detection on the data packets. If this part of data packets pose a security risk, vehicle security is threatened.

In view of this, embodiments of this application provide a security detection method and apparatus, and a transport means. A security detection apparatus is deployed in a data forwarding node, to reduce a security threat caused by a data packet forwarded by a fast forwarding engine, so as to help improve security performance of a transport means.

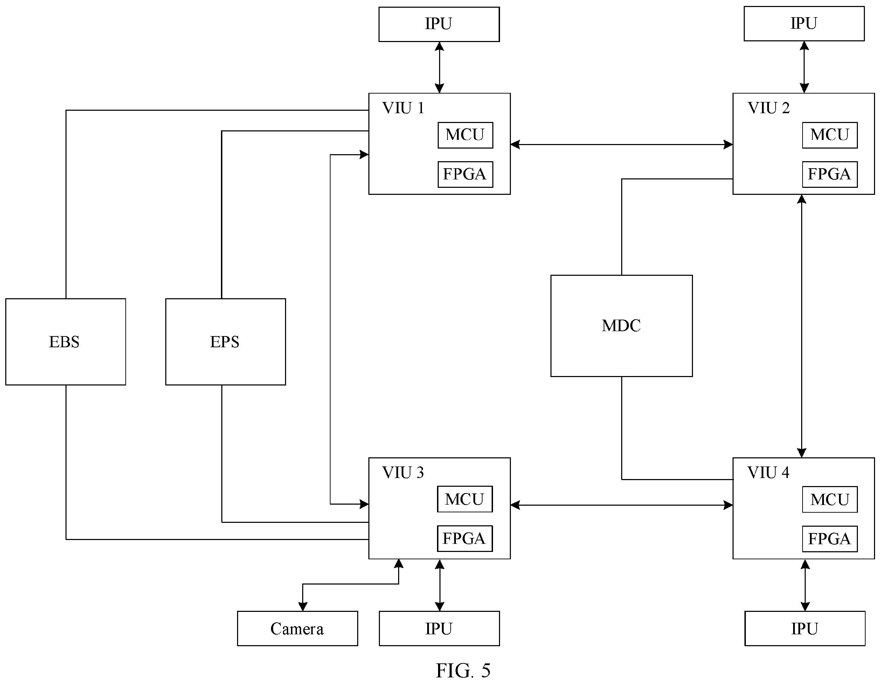

The following uses an example in which the security detection apparatus is deployed on a zonal controller in a zonal architecture for description. FIG. 5 is another diagram of the zonal architecture according to an embodiment of this application. The central computer shown in FIG. 2 may include a mobile data center (mobile data center, MDC) shown in FIG. 5. The MDC may be configured to implement an autonomous driving function. The MDC is responsible for processing an external signal and sending an instruction. The zonal controller shown in FIG. 1 may include a vehicle integration unit (vehicle integration unit, VIU) shown in FIG. 5. The VIU is responsible for receiving a signal from a peripheral device (for example, a camera) and sending the signal to the MDC, and forwarding, to an actuator, for example, an integrated power unit (integrated power unit, IPU), an electrical power system (electrical power system, EPS), or an electrical brake system (electrical brake system, EBS), a control instruction sent by the MDC. The following describes application of embodiments of this application in an actual application scenario by using the MDC and the VIU.

The foregoing zonal controller is described by using the VIU as an example. The zonal controller may alternatively be a controller of another type or named after another name. This is not limited in embodiments of this application.

As shown in FIG. 5, the foregoing uses an example in which the MDC is connected to a VIU 2 and a VIU 4 separately for description. The MDC may alternatively be connected to a VIU 1 and a VIU 3 separately.

The foregoing uses an example in which the central computer includes the MDC for description. The central computer may further include an intelligent cockpit domain controller (cockpit domain controller, CDC), a vehicle domain controller (vehicle domain controller, VDC), and the like. The CDC may be configured to implement cockpit control, and the VDC may be configured to implement vehicle function control (for example, steering or braking).

The central computer, the mobile data center, the cockpit domain controller, the vehicle domain controller, the zonal controller, the vehicle integration unit, and the like that are described in embodiments of this application may have other names. In this application, only the MDC, the CDC, the VDC, the VIU, and the like are used as examples, and are not intended to limit a specific implementation.

As a communication interface unit, the VIU may be deployed at a position in which sensors and actuators of the vehicle are dense, so that the sensors and the actuators of the vehicle can be connected nearby. In addition, the VIU may have specific computing and driving capabilities (for example, the VIU may possess driving and computing functions of some actuators). The sensors include but are not limited to the camera, a microphone, an ultrasonic radar, a millimeter-wave radar, a lidar, a vehicle speed sensor, a motor power sensor, an engine rotation speed sensor, and the like.

The VIU may possess driving and computing functions of some sensors and actuators. In this way, when the CDC or VDC is faulty, the VIU can directly process data collected by the sensor, and then drive a peripheral actuator to execute a corresponding control instruction.

The VIU includes two computing and processing modules: a microcontroller unit MCU and an FPGA. A complete software stack, including an operating system and a data processing and forwarding program, is run on the MCU (for example, the complete software stack may be run on at an application level and a kernel level on the MCU). The FPGA may include the foregoing fast forwarding engine.

The following describes a process of transmitting data from the MDC to the EBS and a function of a data pass-through engine in this scenario by using an example in which the MDC sends a control command to the EBS.

When detecting an obstacle via the camera or another sensor, the MDC determines to send a braking instruction to the EBS. Therefore, a program run on the MDC encapsulates the braking instruction into a data packet, and sends the data packet to a neighboring VIU (for example, the VIU 4). A packet destination (an internet protocol (internet protocol, IP) address) and instruction information are encapsulated in the data packet. After encapsulating the braking instruction into the data packet, the MDC may send the data packet to a default VIU (for example, the VIU 4).

After a network interface on the VIU 4 receives the data packet transmitted by the MDC, the network interface matches the IP address in the data packet with a high-speed forwarding target list. If the IP address in the data packet belongs to a high-speed forwarding target, the data packet is processed and directly forwarded to a next node (for example, the VIU 3) based on the fast forwarding engine of the FPGA. After a network interface on the VIU 3 receives the data packet transmitted from the VIU 4, the network interface matches the IP address in the data packet with the high-speed forwarding target list. When the IP address of the destination of the data packet belongs to the high-speed forwarding target, the data packet is directly forwarded to the EBS based on the high-speed forwarding engine of the FPGA.

In an embodiment, each VIU may include a route list. The route list includes a correspondence between a commonly used format, a VIU identifier, and a target actuator corresponding to the IP address. For example, Table 1 shows a correspondence between the commonly used format, the VIU identifier, and the target actuator.

**Table 1**

| Commonly used format | VIU identifier | Target actuator |
|---|---|---|
| 192.168.0.1 | 3 | EBS |
| 192.168.0.2 | 3 | EPS |
| 192.168.0.3 | 1 | Atmosphere lamp in the front-passenger zone |
| 192.168.0.4 | 2 | Atmosphere lamp on the right of a second row |
| ... | ... | ... |

After receiving the data packet, the VIU 4 may determine, based on the correspondence shown in Table 1, that the VIU identifier corresponding to the commonly used format is different from an identifier of the VIU 4. In this case, the VIU 4 forwards the data packet to the next node (for example, the VIU 3) after determining that the commonly used format belongs to the high-speed forwarding target. After receiving the data packet, the VIU 3 may determine, based on the correspondence shown in Table 1, that the VIU identifier corresponding to the commonly used format is the same as an identifier of the VIU 3. In this case, the VIU 3 forwards the data packet to the target actuator after determining that the commonly used format belongs to the high-speed forwarding target.

In an embodiment, if the IP address in the data packet does not belong to the high-speed forwarding target, the VIU 4 may perform security processing on the data packet by using a software stack on an MCU in the VIU 4, and then send a processed data packet to a next node.

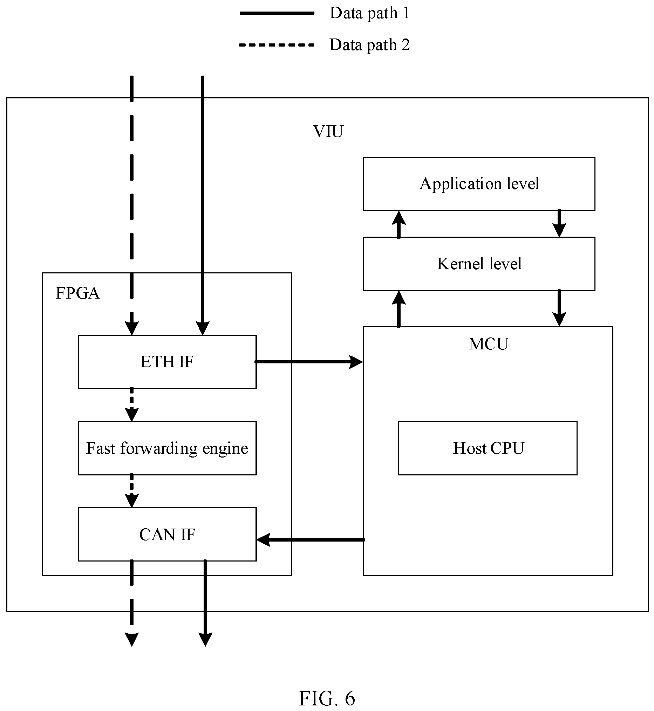

FIG. 6 is a diagram of a collaboration relationship between an FPGA and an MCU in a VIU according to an embodiment of this application. A data path 1 indicates a data path on which processing is performed by the MCU, and a data path 2 indicates a data path on which processing is performed by a data pass-through engine in the FPGA. A relationship between the data path 1 and the data path 2 may not be an inclusion relationship or a mutual exclusion relationship. Data on the data path may be configured based on a specific scenario.

The FPGA may include an ETH IF, a fast forwarding engine, and a controller area network interface (controller area network interface, CAN IF). The FPGA may determine, based on a format of a data packet read or output through an interface, a type of the interface through which the data packet is read or output.

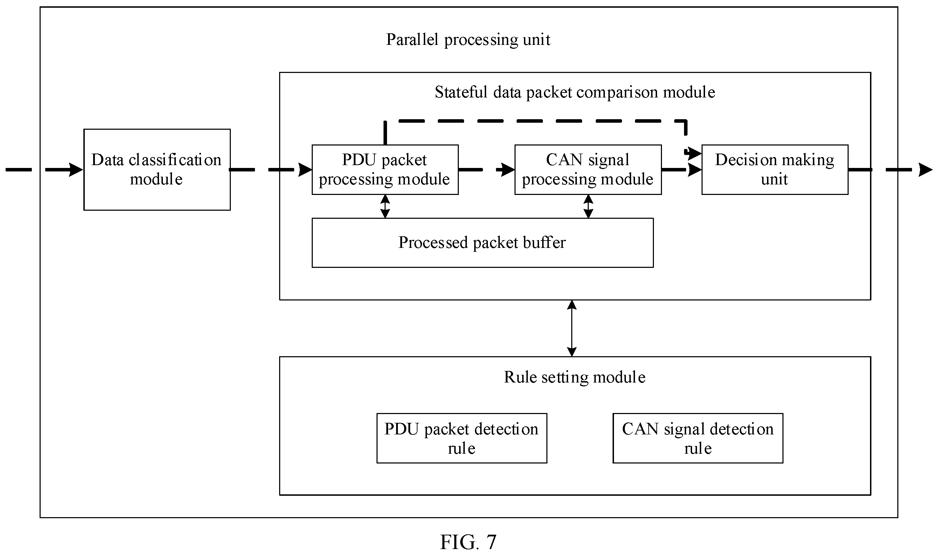

In an embodiment of this application, a parallel processing unit (parallel processing unit) is connected to the fast forwarding engine of the FPGA. A structure of the parallel processing unit may be shown in FIG. 7. The parallel processing unit mainly includes three modules: a data packet classification module (packet classification module), a stateful data packet comparison module (stateful packet matching module), and a rule setting module (rule configuration setting module).

The data packet classification module is configured to filter out a security-unrelated data packet from fast forwarded data.

For example, the data packet classification module filters out, based on an IP address in a data packet, a data packet sent to a security-unrelated component.

For example, the data packet classification module filters out the security-unrelated data packet (for example, data displayed on a display) based on a data type of a data packet.

The rule setting module is configured to store the data. The rule setting module may include: a protocol data unit (protocol data unit, PDU) packet detection rule and a controller area network (controller area network, CAN) signal detection rule. The PDU packet detection rule includes but is not limited to a detection rule for PDU identification information (for example, a PDU ID), a packet length corresponding to the PDU ID, and a normal transmission rate corresponding to the PDU ID. The CAN signal detection rule includes but is not limited to a CAN signal address, a maximum/minimum value of (a data value carried in) a CAN signal, and a maximum increase/decrease of (a variation of the data value carried in) the CAN signal. For example, the following describes application of the detection rule by using three actual attack scenarios.

Replay attack (replay attack) prevention scenario: A PDU packet processing module in the stateful data packet comparison module extracts a PDU ID and a packet sequence number (for example, a seq 1) of a current data packet. The PDU packet processing module compares the packet sequence number with a sequence number (for example, a seq 2), of the data packet, that is obtained when the PDU ID appears for the last time in a processed packet buffer. A replay attack is detected if the seq 2 is greater than or equal to the seq 1.

CAN signal abnormality attack prevention scenario: A CAN signal processing module in the stateful data packet comparison module extracts a signal address and a signal value of a currently processed CAN signal. The CAN signal processing module matches the signal value with a preset signal value range. A CAN signal abnormality is detected if the signal value of the CAN signal exceeds the range.

Denial of service (denial of service) attack prevention scenario: The PDU packet processing module extracts a PDU ID of a current data packet and a timestamp of the packet, extracts past data packets with the PDU ID stored in a processed packet buffer, and obtains a timestamp of each past data packet. The PDU packet processing module calculates a PDU packet transmission rate based on a time interval between the timestamps, and then compares the PDU packet transmission rate with a normal PDU packet transmission rate. A denial of service attack is detected if the currently calculated rate exceeds the normal rate.

The stateful data packet comparison module is configured to: receive a data packet filtered by the data packet classification module, detect the data packet according to the detection rule stored in the rule setting module, and finally output a detection result signal to the outside. The stateful data packet comparison module includes four submodules:
the PDU packet processing module, configured to: analyze a PDU packet according to the detection rule, provide an analysis result, and parse the PDU packet to extract CAN signal information;
the CAN signal processing module, configured to: analyze the CAN signal according to the detection rule and provide an analysis result;
the processed packet buffer, configured to: store a packet processed in a past period of time and record a past processing status, where the PDU packet processing module and the CAN signal processing module may analyze security of the current data packet with reference to the past status, and
for example, the PDU packet processing module extracts the PDU ID of the current data packet and the packet sequence number (for example, the seq 1), and the PDU packet processing module may compare the packet sequence number with the sequence number (for example, the seq 2), of the data packet, that is obtained when the PDU ID appears for the last time in the processed packet buffer, to determine security of the current data packet, and the replay attack is detected if the seq 2 is greater than or equal to the seq 1; and
a decision making unit, configured to: synthesize the output results of the PDU packet processing module and the CAN signal processing module, and output a final detection result.

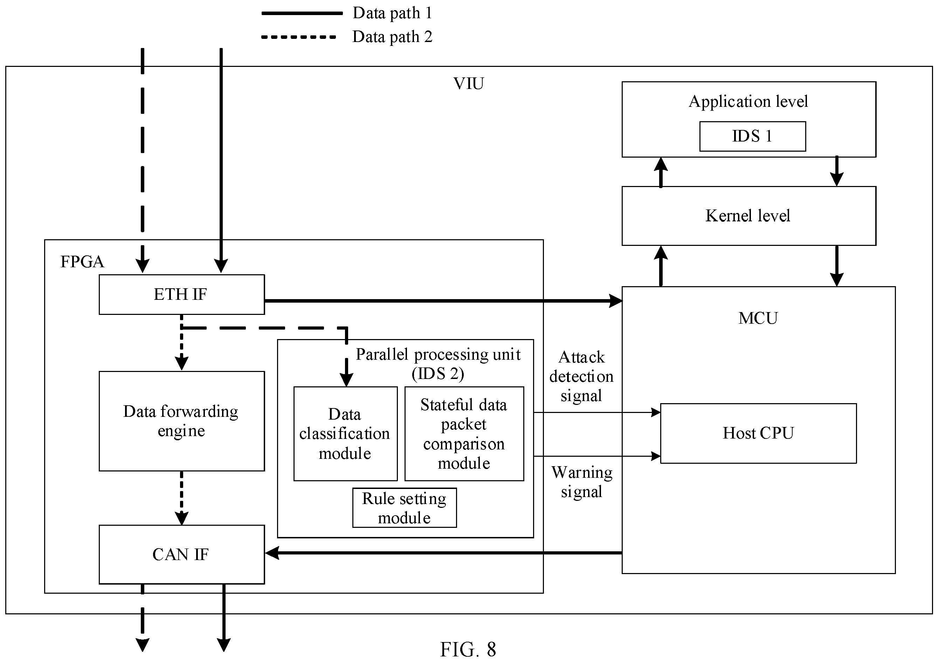

FIG. 8 is a diagram of a security detection system according to an embodiment of this application. The security detection system may include an MCU and an FPGA. The MCU includes an intrusion detection system 1 (IDS 1), and the FPGA includes an intrusion detection system 2 (IDS 2). The IDS 1 may be deployed at an application level or a kernel level of the MCU. A structure of the IDS 2 may be the structure of the parallel processing unit shown in FIG. 7. The following uses an example in which data on a data path 2 is a subset of data on a data path 1 (that is, the data path 1 includes all data packets) for description.

When the IDS 1 is in a non-sentry mode, after receiving data packets forwarded by a node, a VIU may send a part of the data packets to the IDS 2 through the data path 2 for security detection. When the data on the data path 1 passes through the MCU, the MCU may ignore the data packet on which security detection is performed by the IDS 2, and perform security detection on a data packet on which security detection is not performed by the IDS 2.

For example, when a vehicle is in a traveling state, threat degrees of security attacks in the data packets may be classified into three types: a direct threat, a potential threat, and "no threat".

Direct threat: When an IDS or an IDPS determines a threat degree of a data packet as the direct threat, the IDS or the IDPS may determine that the data packet directly threatens traveling safety of the vehicle. For example, if the data packet is a PDU packet in a denial of service attack prevention scenario, and a transmission rate of the PDU packet is greater than a first preset rate m, it may be considered that the PDU packet poses the direct threat. For example, if the data packet is a CAN signal in a CAN signal abnormality attack prevention scenario, and a signal value of the CAN signal does not fall within a first preset range (for example, the first preset range is [a, b)) and does not fall within a second preset signal value range (for example, the second preset range is [b, c)), it may be considered that the CAN signal poses the direct threat.

Potential threat: When the IDS or the IDPS determines a threat degree of a data packet as the potential threat, the IDS or the IDPS may determine that the data packet does not directly threaten traveling safety of the vehicle, but poses a risk of potentially threatening traveling safety. For example, if the data packet is a PDU packet in the denial of service attack prevention scenario, and a transmission rate of the PDU packet is less than or equal to a first preset rate m and greater than a second preset rate n (m>n), it may be considered that the PDU packet poses the potential threat. For example, if the data packet is a CAN signal in the CAN signal abnormality attack prevention scenario, and a signal value of the CAN signal falls within the second preset range (for example, the second preset range is [b, c)), it may be considered that the CAN signal poses the potential threat.

"No threat": When the IDS or the IDPS determines a threat degree of a data packet as "no threat", the IDS or the IDPS may determine that the data packet is secure or does not threaten traveling safety of the vehicle. For example, if the data packet is a PDU packet in the denial of service attack prevention scenario, and a transmission rate of the PDU packet is less than or equal to the second preset rate n, it may be considered that the PDU packet does not pose a threat. For example, if the data packet is a CAN signal in a CAN signal abnormality attack prevention scenario, and a signal value of the CAN signal falls within the first preset range (for example, the first preset range is [a, b)), it may be considered that the CAN signal poses no potential threat.

The foregoing processes of determining the direct threat, the potential threat, and the "no threat" are merely examples. The processes of determining the direct threat, the potential threat, and the "no threat" may alternatively be implemented in other manners. The foregoing is not a limitation on a specific implementation.

There may be another manner of classifying the foregoing threat degrees, and this is merely an example.

When the IDS 2 detects the direct threat, the IDS 2 may send an attack detection signal (attack detection signal) to a host CPU (host CPU) in the MCU, so that the MCU takes a disaster recovery measure to safely stop the vehicle. When the IDS 2 detects no threat, the IDS 2 does not perform any action. When the IDS 2 detects the potential threat (for example, a sending frequency of a data packet with a same PDU ID is abnormal, but the data packet cannot be determined as a direct threat), a decision making unit in the IDS 2 may send a warning signal (warning signal) to the host CPU in the MCU. In this way, the MCU enables a sentry mode of the IDS 1. After switching to the sentry mode, the IDS 1 may perform security detection on all the data packets on the data path 1. As described above, the data path 1 may include all the data packets. In the non-sentry mode, the IDS 1 ignores the data packet processed by IDS 2, to reduce processing pressure of the IDS 1. When the IDS 1 is in the sentry mode, the IDS 1 performs security detection on all the data packets.

For different detection amounts of the IDS 1 for the data packets on the data path 1, security detection modes of the IDS 1 are classified into the sentry mode and the non-sentry mode. In the sentry mode, the IDS may perform security detection on all data packets on which security detection is to be performed. In the non-sentry mode, the IDS 1 may perform security detection on a part of data packets on which security detection is to be performed, and ignore another part of data packets on which security detection is performed by the IDS 2.

When determining the data on the data path 1 as a direct threat, the IDS 1 enables the disaster recovery measure on the MCU to safely stop the vehicle. When the IDS 1 detects, in a period of time, that the data packets on the data path 1 pose no threat, the IDS 1 disables the sentry mode and returns to the non-sentry mode.

The foregoing uses an example in which the threat degrees of the security attacks are classified into the direct threat, the potential threat, and the "no threat" for description. Embodiments of this application are not limited thereto. For example, the threat degrees may alternatively be classified into other levels (for example, a tier-1 threat, a tier-2 threat, a tier-3 threat, and "no threat").

For the vehicle in the traveling state, when the IDS 2 or the IDS 1 detects the direct threat, the MCU takes the disaster recovery measure to safely stop the vehicle. Embodiments of this application are not limited thereto. For example, during traveling on a highway, if the direct threat is detected when a vehicle speed falls within [80 km/h, 120 km/h], the MCU may decelerate to travel to a deceleration lane. For another example, during traveling in an urban area, if the direct threat is detected when a vehicle speed falls within [20 km/h, 60 km/h], the MCU may stop the vehicle based on a traveling status. For another example, in a low-speed traveling phase (for example, when a vehicle speed falls within [5 km/h, 10 km/h]) or a stop state, if the direct threat is detected, the MCU may directly stop the vehicle, and the vehicle may notify a driver to update a security detection rule in a rule library, or the vehicle may alternatively update a security detection rule in a rule library through an over the air (over the air, OTA) interface.

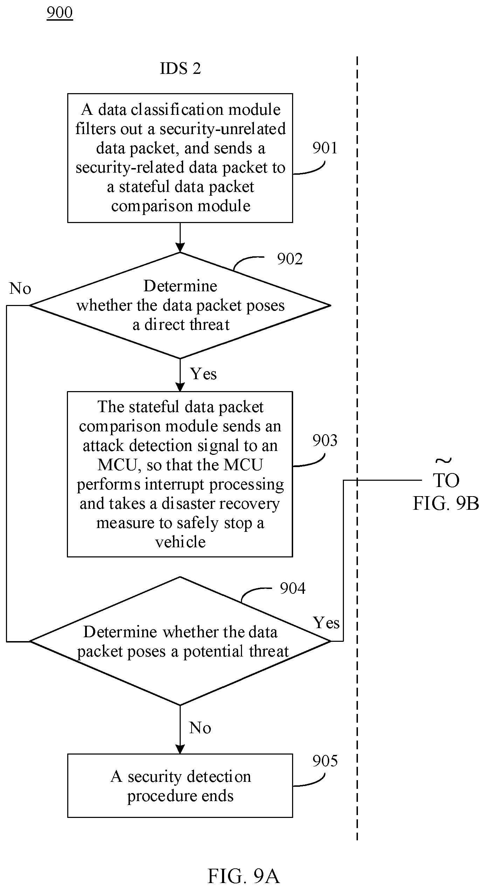

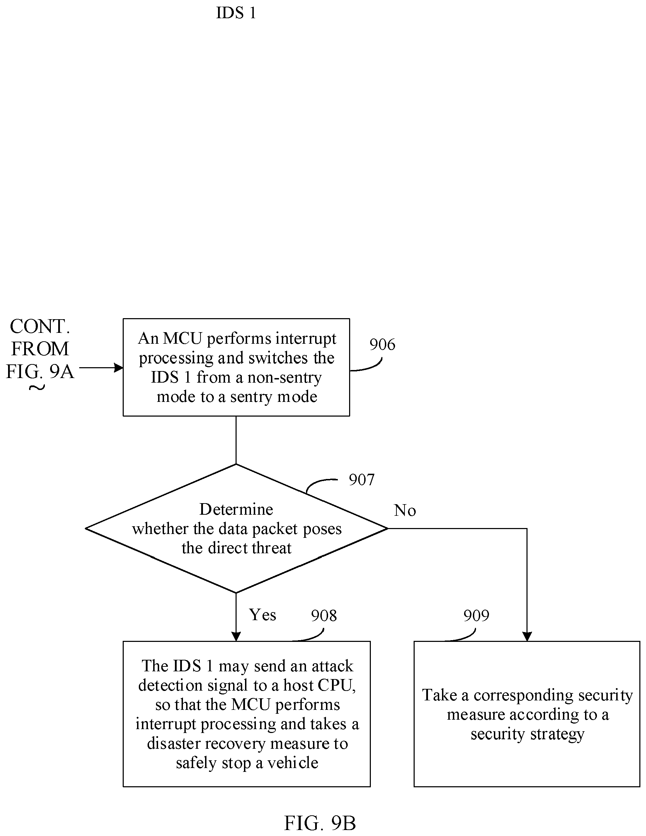

FIG. 9A and FIG. 9B are a schematic flowchart of a security detection method 900 according to an embodiment of this application. As shown in FIG. 9A and FIG. 9B, the method 900 may be performed by the foregoing IDS 1 and IDS 2. The method 900 includes the following steps.

S901: A data packet classification module filters out a security-unrelated data packet, and sends a security-related data packet to a stateful data packet comparison module.

For example, the data packet classification module filters out, based on an IP address in a data packet, a data packet sent to a security-unrelated component.

For another example, the data packet classification module filters out the security-unrelated data packet (for example, data displayed on a display) based on a data type of a data packet.

S902: The stateful data packet comparison module reads a data packet detection rule stored in a rule setting module, and determines whether the data packet poses a direct threat.

In an embodiment, the stateful data packet comparison module may further store the processed data packet in a processed packet buffer.

S903 is performed if the stateful data packet comparison module determines that the data packet poses a security threat. The stateful data packet comparison module performs S904 if the stateful data packet comparison module determines that the data packet does not pose a security threat.

S903: If the data packet poses the direct threat, the stateful data packet comparison module sends an attack detection signal to an MCU, so that the MCU performs interrupt processing and takes a disaster recovery measure to safely stop a vehicle.

Interrupt processing is a computer term. That a host CPU receives the attack detection signal may be understood as an interrupt, and interrupt processing may be processing for different interrupts.

S904: If the data packet does not pose the direct threat, the stateful data packet comparison module reads the data packet detection rule stored in the rule setting module, and determines whether the data packet poses a potential threat.

For example, if a sending frequency of a data packet with a same PDU ID is abnormal, and the stateful data packet comparison module cannot determine the data packet as a direct threat, a threat degree of the data packet may be determined as the potential threat.

S905 is performed if the stateful data packet comparison module determines that the data packet does not pose the potential threat. The stateful data packet comparison module performs S906 if the stateful data packet comparison module determines that the data packet poses the potential threat.

S905: If the data packet does not pose the potential threat, the IDS 2 performs no processing.

In the foregoing descriptions, if the data packet does not pose the potential threat, a security detection procedure of the data packet ends, and the IDS 2 may continue to perform security detection on a next data packet, that is, continue to perform S901 to S904 on the next data packet.

S906: If the data packet poses the potential threat, the stateful data packet comparison module sends a warning signal to an MCU, so that the MCU performs interrupt processing and switches the IDS 1 from a non-sentry mode to a sentry mode.

In an embodiment, when the IDS 1 is in the non-sentry mode, and data packets on a data path 1 pass through the MCU, the MCU may ignore a data packet on which security detection is performed by the IDS 2, and perform security detection on a data packet on which security detection is not performed by the IDS 2. The IDS 1 performs security detection on all data packets after the IDS 1 switches from the non-sentry mode to the sentry mode.

S907: The IDS 1 determines whether the data packet poses the direct threat.

S908 may be performed if the IDS 1 determines that the data packet poses the direct threat. S909 is performed if the IDS 1 determines that the data packet does not pose the direct threat.

In an embodiment, the IDS 1 may determine, in preset duration, whether all the data packets on the data path 1 pose the direct threat.

For example, the preset duration may be 1 minute or 30 seconds.

In an embodiment, the preset duration may be set with reference to a specific scenario. For example, the preset duration may be 1 minute when the vehicle travels on a highway; or the preset duration may be 30 seconds when the vehicle travels on an urban road. For example, the preset duration may be 1 minute when the vehicle is in an autonomous driving state; or the preset duration may be 30 seconds when the vehicle is in a state of manual driving by a driver.

S908: If the IDS 1 determines that the data packet poses the direct threat, the IDS 1 may send an attack detection signal to the host CPU, so that the MCU performs interrupt processing and takes the disaster recovery measure to safely stop the vehicle.

S909: If the IDS 1 determines that the data packet does not pose the direct threat, the IDS 1 takes a corresponding security measure according to a security strategy.

In an embodiment, that the IDS 1 takes the corresponding security measure according to the security strategy includes: The IDS 1 switches from the sentry mode to the non-sentry mode.

In embodiments of this application, the IDS 1 may perform a more complex security detection process than the IDS 2. For example, the IDS 1 may compare data packets sent to two different ECUs, to determine whether comprehensive behavior of the two different data packets causes a security threat. The IDS 2 may distinguish the data packets sent to the two different ECUs (for example, an ECU 1 and an ECU 2), to separately perform security detection on a data packet sent to the ECU 1 and a data packet sent to the ECU 2.

In embodiments of this application, a hardware detection apparatus, namely, the IDS 2, is deployed, to help improve a processing speed during data packet processing.

The foregoing security strategy may be of different types. For example, the security strategy may be classified into a conservative security strategy and an adventurous security strategy. For example, if the security strategy is a conservative security strategy, when determining that the data packet poses a direct threat, the IDS 1 may control the vehicle to directly and safely stop. For example, if the security strategy is an adventurous security strategy, the IDS 1 may ignore a warning from the IDS 2, and switches from the sentry mode to the non-sentry mode or another mode.

The foregoing uses an example in which the IDS 2 and the IDS 1 are respectively deployed in an FPGA and the MCU for description. Alternatively, an IDPS 2 and an IDPS 1 may be respectively deployed in an FPGA and the MCU. Alternatively, an IDPS 2 and the IDS 1 may be respectively deployed in an FPGA and the MCU. Alternatively, the IDS 2 and an IDPS 1 may be respectively deployed in an FPGA and the MCU.

In embodiments of this application, a local IDS 1 and IDS 2 of a transport means may be used in a process of performing security detection on the data packet. This can effectively avoid a security hazard caused by direct forwarding of the data packet by a fast forwarding engine.

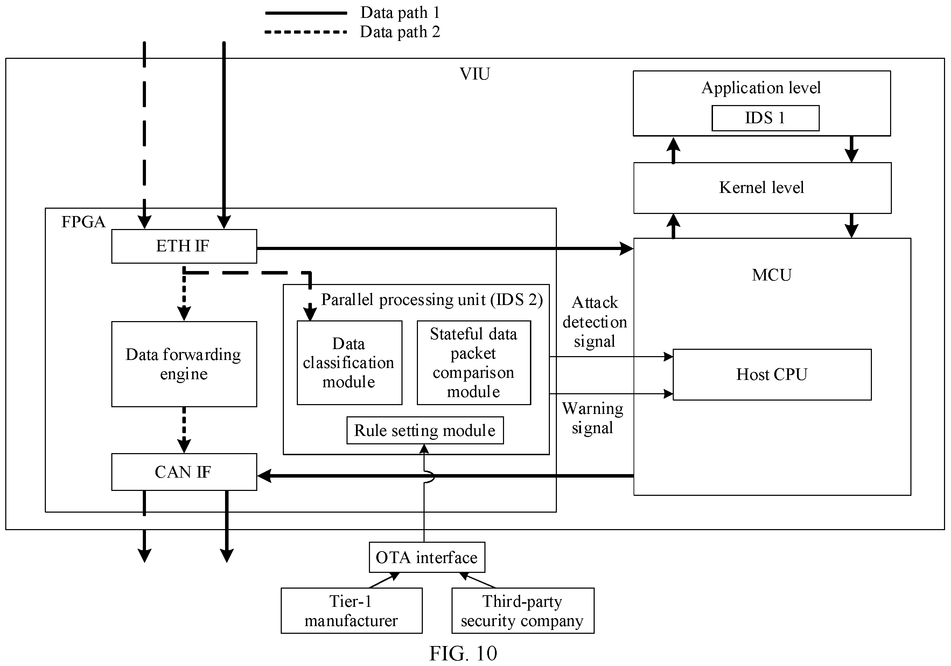

In addition to performing security detection on the data packet, the rule setting module in the IDS 2 in embodiments of this application may be further connected to an over the air (over the air, OTA) interface that supports remote upgrade. FIG. 10 is another diagram of performing security detection by the FPGA and the MCU according to an embodiment of this application. It can be learned that the rule setting module in the IDS 2 may be connected to the OTA interface.

Update through the OTA interface may include the following two steps.

(1) Establish a secure connection between the OTA interface and a remote end.

A public key in a public-private key pair is injected into the OTA interface during delivery. A private key is owned by an update service provider and is not disclosed to the public. When the update service provider needs to update a rule, a server encrypts update information (an update rule and an update version) using the private key and sends encrypted update information to the OTA interface. After verifying, using the public key, that the update information is from an authorized party, the OTA interface updates a security detection rule stored in the rule setting module.

In an embodiment, the update service provider may be a tier-1 (Tier-1) manufacturer or a third-party security company.

The foregoing uses a solution in which a channel is established based on the public-private key pair as an example for description. A purpose is to establish a secure channel between the OTAinterface and the update service provider. Embodiments of this application are not limited thereto. For example, the OTA interface and the server may store a same key. When the update service provider needs to update the rule, the server may encrypt the update information using the key and then send encrypted update information to the OTA interface. After receiving the encrypted update information, the OTA interface may decrypt the encrypted update information using the key stored in the OTA interface, to obtain the update information.

(2) The OTA interface receives an update data packet and updates the stored detection rule.

The OTA interface decrypts the received data packet using the public key, then obtained, through comparison, whether the update version in the update information matches a current version, and discards current update if the update version does not match the current version. If the update version matches the current version, the security detection rule in the rule setting module is updated. The update information may include an update command, for example, rule addition, rule deletion, or rule modification.

For example, if the update command is rule addition, the OTA interface adds a security detection rule in the update information to the rule setting module.

For another example, if the update command is rule deletion, the OTA interface compares a security detection rule in the update information with the security detection rule in the rule setting module, and deletes consistent data.

For another example, if the update command is rule modification, the OTA interface searches in the rule setting module based on an index provided in the update information (the index may be a single index like a PDU ID or a CAN signal address, or may be a combination of a plurality of attributes), and updates a corresponding security detection rule when finding the corresponding security detection rule.

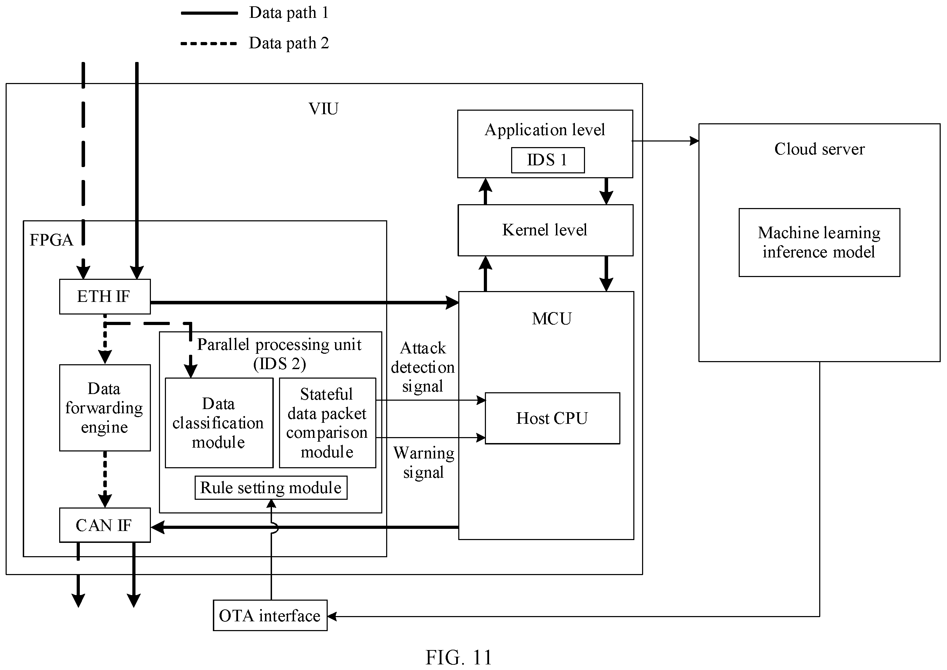

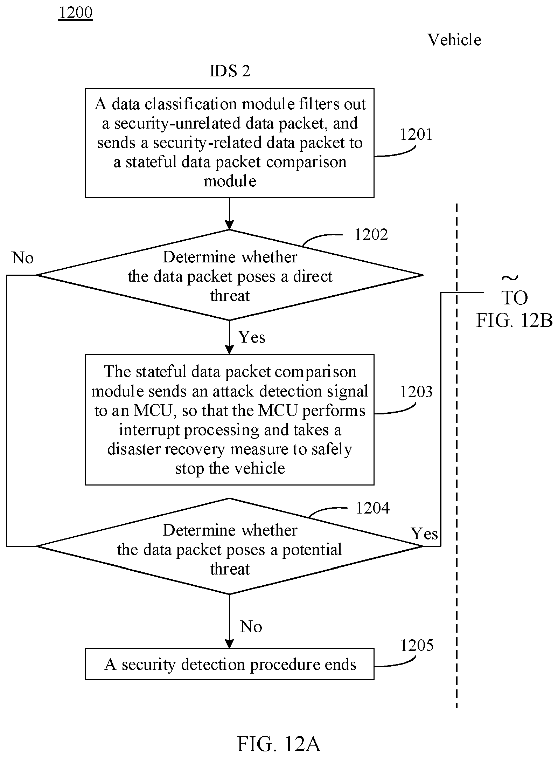

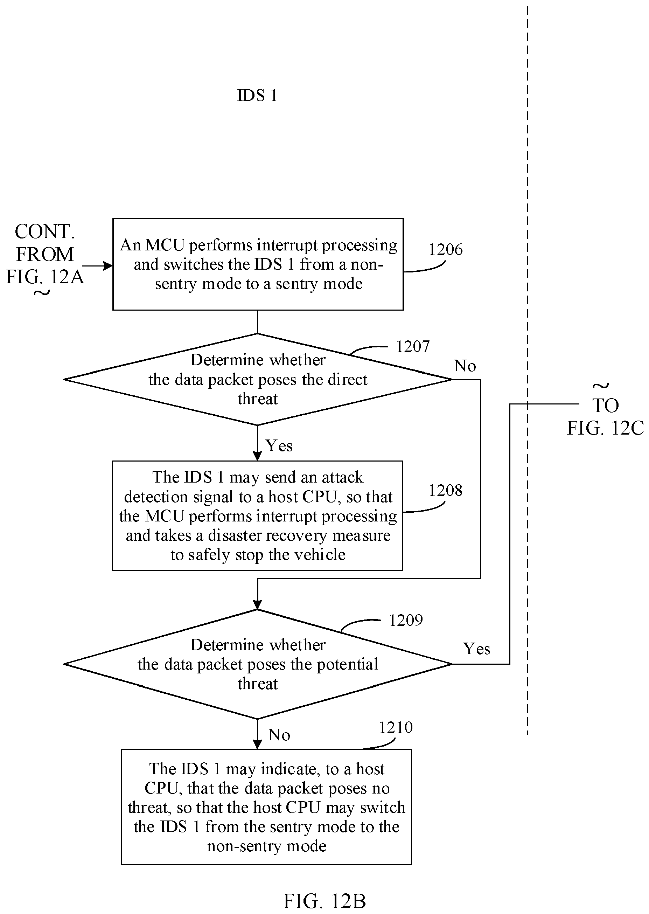

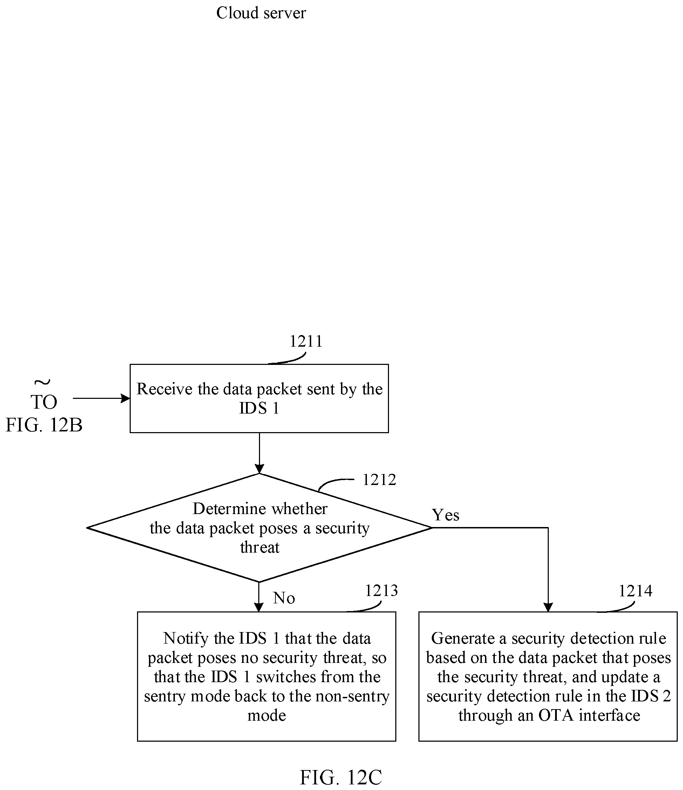

With reference to FIG. 8 to FIG. 10, the foregoing describes a process of performing security detection on the data packet via local security detection apparatuses (the IDS 1 and the IDS 2) of the vehicle. With reference to FIG. 11, and FIG. 12A, FIG. 12B, and FIG. 12C, the following describes a process of performing security detection on a data packet via a local vehicle and a cloud server.

FIG. 11 is another diagram of a security detection system according to an embodiment of this application. The security detection system may include an MCU, an FPGA, and a cloud server. The MCU includes an IDS 1, the FPGA includes an IDS 2, and the cloud server includes a machine learning inference model. The following uses an example in which data on a data path 2 is a subset of data on a data path 1 (that is, the data path 1 includes all data packets) for description.

When the IDS 1 is in a non-sentry mode, after receiving data packets forwarded by a node, a VIU may send a part of the data packets to the IDS 2 through the data path 2 for security detection. When the data on the data path 1 passes through the MCU, the MCU may ignore the data packet on which security detection is performed by the IDS 2, and perform security detection on a data packet on which security detection is not performed by the IDS 2.

When the IDS 2 detects a direct threat, the IDS 2 may send an attack detection signal to a host CPU, so that the MCU takes a disaster recovery measure to safely stop a vehicle. When the IDS 2 detects no threat, the IDS 2 does not perform any action. When the IDS 2 detects a potential threat (for example, a sending frequency of a data packet with a same PDU ID is abnormal, but the data packet cannot be determined as a direct threat), the IDS 2 may send a warning signal to the host CPU in the MCU. In this way, the MCU enables a sentry mode of the IDS 1. After switching to the sentry mode, the IDS 1 may perform security detection on all the data packets on the data path 1.

When determining the data on the data path 1 as a direct threat, the IDS 1 similarly enables the disaster recovery measure on the MCU to safely stop the vehicle. When the IDS 1 detects and determines no threat in a period of time, the IDS 1 switches from the sentry mode back to the non-sentry mode. If a detection result of the IDS 1 is still a "potential threat", the IDS 1 may send, to the cloud server, a data packet processed since the sentry mode is enabled.

In an embodiment, a machine learning inference model may be carried in the cloud server. The machine learning inference model may be obtained through training based on running data of an entire vehicle fleet (for example, all vehicles produced by a vehicle manufacturer), and checks uploaded data. If there is no threat, the IDS 1 is notified that there is no threat. After receiving an indication indicating that there is no threat, the IDS 1 may switch from the sentry mode back to the non-sentry mode. If there is a threat, the machine learning inference model may generate a new detection rule based on a data packet uploaded by the IDS 1, and update a security detection rule in the rule setting module in the IDS 2 through an OTA interface.

For example, when the IDS 1 determines that a sending frequency of a data packet with a same PDU ID is abnormal (for example, when the frequency is a), the IDS 1 may determine that the data packet poses a potential threat, and send the data packet to the cloud server. The cloud server determines, via the machine learning inference model, that the data packet poses a direct threat, and sequentially send, to the vehicle through the OTA interface, a security detection rule that a frequency of sending the data packet corresponding to the PDU ID is less than or equal to b (for example, a is greater than or equal to b). In this way, the vehicle may update the security detection rule in a rule library.

In embodiments of this application, the machine learning inference model carried in the cloud server may have two functions. One function is that the machine learning inference model is used as a last barrier for security detection, and may finally determine whether there is a security attack. The other function is that the machine learning inference model is used as a cloud server to update the security detection rule for an attacked vehicle (or a vehicle in the entire vehicle fleet).

FIG. 12A, FIG. 12B, and FIG. 12C are a schematic flowchart of a security detection method 1200 according to an embodiment of this application. As shown in FIG. 12A, FIG. 12B, and FIG. 12C, the method 1200 may be performed by the foregoing IDS 1, IDS 2, and cloud server. The method 1200 includes the following steps.

S1201: A data packet classification module filters out a security-unrelated data packet, and sends a security-related data packet to a stateful data packet comparison module.

S1202: The stateful data packet comparison module reads a data packet detection rule stored in a rule setting module, and determines whether the data packet poses a direct threat.

S1203 is performed if the stateful data packet comparison module determines that the data packet poses a security threat. The stateful data packet comparison module performs S1204 if the stateful data packet comparison module determines that the data packet does not pose a security threat.

S1203: If the data packet poses the direct threat, the stateful data packet comparison module sends an attack detection signal to an MCU, so that the MCU performs interrupt processing and takes a disaster recovery measure to safely stop a vehicle.

S1204: If the data packet does not pose the direct threat, the stateful data packet comparison module reads the data packet detection rule stored in the rule setting module, and determines whether the data packet poses a potential threat.

S1205 is performed if the stateful data packet comparison module determines that the data packet does not pose the potential threat. The stateful data packet comparison module performs S1206 if the stateful data packet comparison module determines that the data packet poses the potential threat.

S1205: If the data packet does not pose the potential threat, the IDS 2 performs no processing.

S1206: If the data packet poses the potential threat, the stateful data packet comparison module sends a warning signal to an MCU, so that the MCU performs interrupt processing and switches the IDS 1 from a non-sentry mode to a sentry mode.

S1207: The IDS 1 determines whether the data packet poses the direct threat.

S1208 may be performed if the IDS 1 determines that the data packet poses the direct threat. S1209 is performed if the IDS 1 determines that the data packet does not pose the direct threat.

In an embodiment, the IDS 1 may determine, in preset duration, whether all data packets on a data path 1 pose the direct threat.

S1208: If the IDS 1 determines that the data packet poses the direct threat, the IDS 1 may send the attack detection signal to a host CPU, so that the MCU performs interrupt processing and takes the disaster recovery measure to safely stop the vehicle.

For processes of S1201 to S1208, refer to the processes of S901 to S908. For brevity, details are not described herein again.

S1209: If the IDS 1 determines that the data packet does not pose the direct threat, the IDS 1 may continue to determine whether the data packet poses the potential threat.

S1210 is performed if the IDS 1 determines that the data packet does not pose the potential threat. S1211 is performed if the IDS 1 determines that the data packet poses the potential threat.

S1210: If the IDS 1 determines that the data packet does not pose the potential threat, the IDS 1 may indicate, to a host CPU, that the data packet poses no threat, so that the host CPU may switch the IDS 1 from the sentry mode to the non-sentry mode.

S1211: If the IDS 1 determines that the data packet poses the potential threat, the IDS 1 may send, to the cloud server, a data packet processed since the IDS 1 enables the sentry mode.

In an embodiment, if the IDS 1 determines that the data packet poses the potential threat, the IDS 1 may also send, to the cloud server, the data packet that is determined by the IDS 1 and that poses the potential threat.

S1212: The cloud server determines whether the data packet sent by the IDS 1 poses the security threat.

S1213 is performed if the cloud server determines that the data packet does not pose the security threat. S1214 is performed if the cloud server determines that the data packet poses the security threat.

S1213: If the cloud server determines that the data packet does not pose the security threat, the cloud server notifies the IDS 1 that the data packet poses no security threat, so that the IDS 1 switches from the sentry mode back to the non-sentry mode.

S1214: If the cloud server determines that the data packet poses the security threat, the cloud server may generate a security detection rule based on the data packet that poses the security threat, and update a security detection rule in the IDS 2 through an OTA interface.

In embodiments of this application, when both the IDS 1 and the IDS 2 determine that the data packet poses the potential threat, the vehicle can send the data packet to the cloud server for security detection. Then, the cloud server can finally determine whether the data packet poses the security threat. In addition, in a manner of performing security detection in combination with the vehicle and a cloud, the cloud server can further generate the new security detection rule based on the data packet that poses the security threat, and update, through the OTAinterface, the security detection rule locally stored in the vehicle (or an entire vehicle fleet). This helps update the security detection rule in the vehicle in real time, and helps the vehicle cope with an unknown security attack.

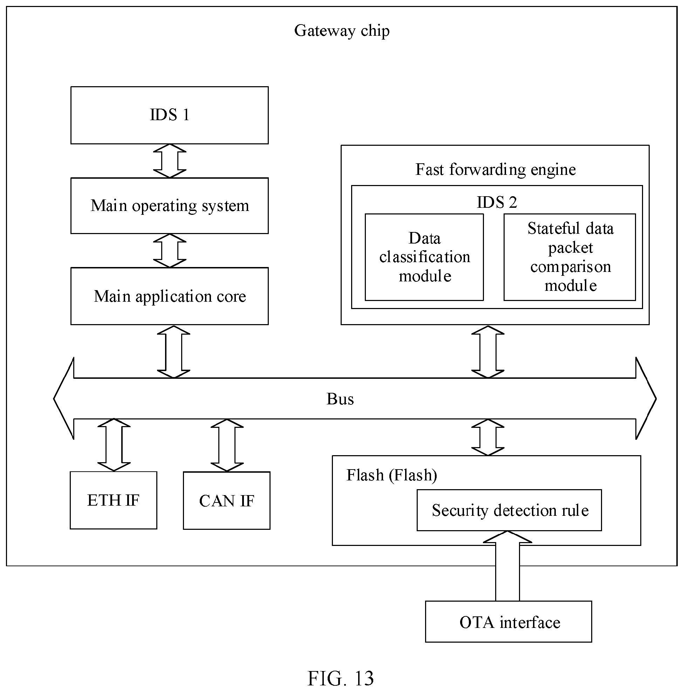

The foregoing describes the FPGA-based security detection method with reference to FIG. 8 to FIG. 12C. The IDS 1 and the IDS 2 are located on two different chips. An embodiment of this application further provides an integration solution of a system on a chip based on an intellectual property core (intellectual property core, IP core). FIG. 13 is a diagram of a gateway chip according to an embodiment of this application. In an embodiment of this application, a fast forwarding engine may be integrated into the gateway chip. An IDS 1 may run on a main application core (application core), and an IDS 2 is integrated into the fast forwarding engine as an IP core. The fast forwarding engine is interconnected to the main application core through a system bus.

A security detection rule may be stored in a flash (Flash). The IDS 2 sends a read request to read the security detection rule. In an embodiment, both the main application core and the IDS 2 may send the read request to the flash, to read the security detection rule. By using an address range preconfigured before delivery, the flash may allocate a part of storage space to the main application core, and allocate a part of storage space to the IDS 2 to store the security detection rule. In this way, it can be ensured that a program on the main application core does not modify the security detection rule. In a scenario in which the main application core is required to modify the security detection rule, an access permission for the storage space of the security detection rule may be opened to the main application core.

The foregoing application core may be a CPU or an application processor.

For a specific procedure of detecting a data packet in FIG. 13, refer to the security detection methods shown in FIG. 9A and FIG. 9B, and FIG. 12A, FIG. 12B, and FIG. 12C. For example, after being read through an ethernet interface ETH IF, the data packet is separately sent to the main application core and the fast forwarding engine through the bus. After being decapsulated and encapsulated separately, the data packet is sent through a CAN IF. In addition, the IDS 1 on the main application core and the IDS 2 in the fast forwarding engine perform security detection on the data packet according to a specified security detection rule. For a specific manner, refer to the descriptions in the foregoing embodiment. Details are not described herein again.

In embodiments of this application, a security detection apparatus may be used in various types of security detection in which a network structure is used, and security detection is not limited to an IDS that performs a security check on an external input, and may also be for monitoring internal communication and resource access. For example, in a chip design, different IP chips are interconnected through a system bus. In embodiments of this application, communication between the IP chips may be monitored by modifying a detection rule format and detection logic.

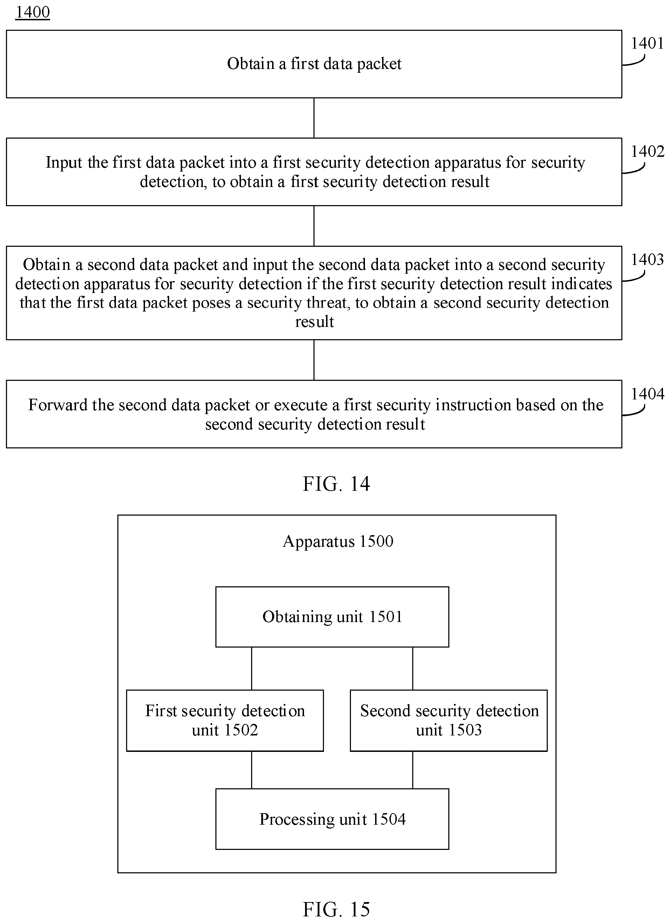

FIG. 14 is a schematic flowchart of a security detection method 1400 according to an embodiment of this application. As shown in FIG. 14, the method includes the following steps.

S1401: Obtain a first data packet.

For example, as shown in FIG. 8, the first data packet may be a data packet on the data path 1.

In an embodiment, the first data packet may be a part or all of data packets on which security detection is to be performed.

S1402: Input the first data packet into a first security detection apparatus for security detection, to obtain a first security detection result.

For example, the first security detection apparatus may be the IDS 2 in FIG. 8.

For example, the first security detection apparatus may be the IDS 2 in FIG. 10.

In an embodiment, the first security detection result may indicate that the first data packet poses a security threat or poses no threat. For example, that the first data packet poses the security threat may include that the first data packet poses a direct threat or a potential threat.

For descriptions of the direct threat, the potential threat, or the "no threat", refer to the foregoing embodiment. Details are not described herein again.

S1403: Obtain a second data packet and input the second data packet into a second security detection apparatus for security detection if the first security detection result indicates that the first data packet poses the security threat, to obtain a second security detection result.

For example, the second security detection apparatus may be the IDS 1 in FIG. 8.

For example, the second security detection apparatus may be the IDS 1 in FIG. 10.

In an embodiment, obtaining the second data packet and inputting the second data packet into the second security detection apparatus for security detection if the first security detection result indicates that the first data packet poses the security threat, to obtain the second security detection result includes: obtaining the second data packet and inputting the second data packet into the second security detection apparatus for security detection if the first security detection result indicates that the first data packet poses the potential threat, to obtain the second security detection result.

In an embodiment, if the first security detection result indicates that the first data packet poses the direct threat, a security instruction (for example, controlling a vehicle to stop) is directly executed or a user is notified that a vehicle currently poses the security threat.

S1404: Forward the second data packet or execute a first security instruction based on the second security detection result.

Optionally, the first security instruction is for controlling the vehicle to perform a security operation. For example, the first instruction may be for controlling the vehicle to safely stop; the first instruction may be for controlling a vehicle speed of the vehicle to decrease to a preset speed threshold or below a preset speed threshold; or if the vehicle is in an autonomous driving state, the first security instruction may be for prompting the user to take over the vehicle.

In an embodiment, if the vehicle and a first server collaboratively perform security detection on a data packet, the second security detection result may indicate that the second data packet poses a security threat or poses no threat. The security threat may include a direct threat or a potential threat.

Optionally, forwarding the second data packet or executing the first security instruction based on the second security detection result includes: sending the second data packet to the first server if the second security detection result indicates that the second data packet poses the security threat; receiving a third security detection result sent by the first server, where the third security detection result indicates whether the second data packet poses the security threat; and forwarding the second data packet or executing the first security instruction based on the third security detection result.

Optionally, the sending the second data packet to the first server if the second security detection result indicates that the second data packet poses the security threat includes: sending the second data packet to the first server if the second security detection result indicates that the second data packet poses the potential threat.

Optionally, if the second security detection result indicates that the second data packet poses the direct threat, a security instruction (for example, controlling the vehicle to stop) is directly executed or the user is notified that a vehicle currently poses the security threat.

Optionally, the forwarding the second data packet or executing the first security instruction based on the third security detection result includes: forwarding the second data packet if the third security detection result indicates that the second data packet does not pose the security threat; or executing the first security instruction if the third security detection result indicates that the second data packet poses the security threat.

In an embodiment, if the vehicle performs security detection on the data packet according to a local security strategy of the vehicle, the second security detection result may indicate that the second data packet poses the security threat or poses no threat.

Optionally, forwarding the second data packet or executing the first security instruction based on the second security detection result includes: forwarding the second data packet if the second security detection result indicates that the second data packet does not pose the security threat; or executing the first security instruction if the second security detection result indicates that the second data packet poses the security threat.

Optionally, the first security detection apparatus includes a rule library. A security detection rule is stored in the rule library. The method further includes: receiving security detection rule update information sent by a second server; and updating the security detection rule in the rule library based on the security detection rule update information.

For example, as shown in FIG. 10, the first security detection apparatus may be the IDS 2. The IDS 2 includes a rule setting module. The rule setting module may receive, through an OTA interface, the security detection rule update information sent by the server, to update the security detection rule in the rule setting module in real time. This helps avoid a case in which a single security detection rule is difficult to cope with changing attack means.

Optionally, obtaining the first data packet includes: obtaining the first data packet and a third data packet in a first time period. The method further includes: inputting the third data packet into the second security detection apparatus for security detection, to obtain a fourth security detection result; and forwarding the third data packet or executing a second security instruction based on the fourth security detection result.

Optionally, the second security instruction is for controlling the vehicle to perform the security operation. For example, the second instruction may be for controlling the vehicle to safely stop; the second instruction may be for controlling the vehicle speed of the vehicle to decrease to the preset speed threshold or below the preset speed threshold; or if the vehicle is in the autonomous driving state, the second security instruction may be for prompting the user to take over the vehicle.

For example, as shown in FIG. 8, the VIU obtains the first data packet and the third data packet in the first time period. The data path 1 may include the first data packet and the third data packet, and the data path 2 may include the first data packet. The IDS 2 may perform security detection on the first data packet on the data path 2. When the IDS 1 performs security detection on a data packet on the data path 1, the IDS 1 may ignore the first data packet on which the IDS 2 performs security detection, and perform security detection on the third data packet. In this way, the IDS 1 may ignore a part of data packets on the data path 1. This helps improve efficiency of performing security detection on the data packet by the IDS 1.

Optionally, the method further includes: forwarding the first data packet.

For example, as shown in FIG. 8, when the IDS 2 performs security detection on the data packet on the data path 1, the FPGA may further forward the data packet on the data path 1. In this way, fast forwarding of the data packet can be implemented when the IDS 2 determines that the data packet on the data path 1 does not pose a security threat. The IDS 2 sends a warning signal to the host CPU when the IDS 2 determines that the data packet on the data path 1 poses a security threat. In this way, the IDS 1 switches to a sentry mode, and security detection may be performed on all to-be-detected data packets by the IDS 1. This helps improve security during data forwarding.

Optionally, the first security detection apparatus is a first intrusion detection system IDS or a first intrusion detection and prevention system IDPS, and/or the second security detection apparatus is a second IDS or a second IDPS.

Optionally, the first security detection apparatus is located in a field programmable gate array FPGA, and/or the second security detection apparatus is located in a microcontroller unit MCU.

Optionally, the first security detection apparatus and the second security detection apparatus may be located in a zonal controller. For example, the zonal controller may be the foregoing VIU.

Optionally, the first security detection apparatus is located in a fast forwarding engine, and/or the second security detection apparatus runs on a main application core.

Optionally, the first security detection apparatus and the second security detection apparatus may be located in a gateway chip.

An embodiment of this application provides an apparatus configured to implement any one of the foregoing methods, for example, provides an apparatus, including a unit (or means) configured to implement the steps performed by the vehicle in any one of the foregoing methods. FIG. 15 is a block diagram of a security detection apparatus 1500 according to an embodiment of this application. As shown in FIG. 15, the apparatus 1500 includes: an obtaining unit 1501, configured to obtain a first data packet; a first security detection unit 1502, configured to input the first data packet into a first security detection apparatus for security detection, to obtain a first security detection result, where the obtaining unit 1501 is further configured to obtain a second data packet if the first security detection result indicates that the first data packet poses a security threat; a second security detection unit 1503, configured to input the second data packet into a second security detection apparatus for security detection, to obtain a second security detection result; and a processing unit 1504, configured to forward the second data packet or execute a first security instruction based on the second security detection result.

Optionally, the apparatus 1500 further includes a sending unit and a receiving unit. The processing unit 1504 is specifically configured to: if the second security detection result indicates that the second data packet poses a security threat, control the sending unit to send the second data packet to a first server; control the receiving unit to receive a third security detection result sent by the first server, where the third security detection result indicates whether the second data packet poses the security threat; and forward the second data packet or execute the first security instruction based on the third security detection result.

Optionally, the processing unit 1504 is specifically configured to: if the third security detection result indicates that the second data packet does not pose the security threat, control the sending unit to forward the second data packet; or execute the first security instruction if the third security detection result indicates that the second data packet poses the security threat.

Optionally, the apparatus 1500 further includes a sending unit. The processing unit 1504 is specifically configured to: if the second security detection result indicates that the second data packet does not pose a security threat, control the sending unit to forward the second data packet; or execute the first security instruction if the second security detection result indicates that the second data packet poses a security threat.

Optionally, the first security detection apparatus includes a rule library, and a security detection rule is stored in the rule library. The processing unit 1504 is further configured to update the security detection rule in the rule library based on security detection rule update information sent by a second server.

Optionally, the obtaining unit 1501 is specifically configured to obtain the first data packet and a third data packet in a first time period. The second security detection unit is further configured to: input the third data packet into the second security detection apparatus for security detection, to obtain a fourth security detection result; and forward the third data packet or execute a second security instruction based on the fourth security detection result.

Optionally, the apparatus 1500 further includes a sending unit. The sending unit is configured to forward the first data packet.

Optionally, the first security detection apparatus is a first intrusion detection system IDS or a first intrusion detection and prevention system IDPS, and/or the second security detection apparatus is a second IDS or a second IDPS.

Optionally, the first security detection apparatus is located in a field programmable gate array FPGA, and/or the second security detection apparatus is located in a microcontroller unit MCU.

Optionally, the first security detection apparatus is located in a fast forwarding engine, and/or the second security detection apparatus runs on a main application core.

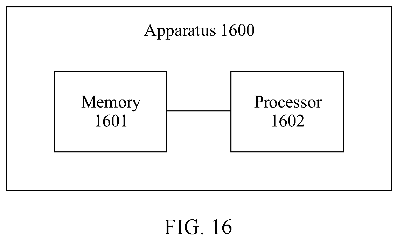

FIG. 16 is a block diagram of an apparatus 1600 according to an embodiment of this application. The apparatus 1600 includes: a memory 1601, configured to store computer instructions; and a processor 1602: configured to execute the computer instructions stored in the memory, to enable the apparatus 1600 to perform the method 900, the method 1200, or the method 1400.

An embodiment of this application further provides a vehicle. The vehicle may include the apparatus 1500 or the apparatus 1600.

An embodiment of this application further provides a computer program product. The computer program product includes computer program code. When the computer program code is run on a computer, the computer is enabled to perform the foregoing method.

An embodiment of this application further provides a computer-readable medium. The computer-readable medium stores program code. When the computer program code is run on a computer, the computer is enabled to perform the foregoing method.

Division into the units of the foregoing apparatus is merely logical function division. During actual implementation, all or some of the units may be integrated into a physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement a function of each unit of the apparatus. For example, the processor is a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC. Functions of some or all of the foregoing units are implemented by designing a logical relationship between elements in the circuit. For another example, in another implementation, the hardware circuit may be implemented by a PLD. An FPGA is used as an example. The FPGA may include a large quantity of logic gate circuits. A configuration file is used to configure a connection relationship between the logic gate circuits, to implement functions of some or all of the foregoing units. All the units of the foregoing apparatus may be implemented in the form of invoking the software by the processor, or may be implemented in the form of the hardware circuit, or some of the units may be implemented in the form of invoking the software by the processor, and a remaining part may be implemented in the form of the hardware circuit.

In embodiments of this application, the processor is a circuit that has a signal processing capability. In an implementation, the processor may be a circuit that has an instruction reading and running capability, for example, a CPU, a microprocessor, a GPU, or a DSP. In another implementation, the processor may implement a specific function by using the logical relationship of the hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of a system on a chip (system-on-a-chip, SOC). The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

A person of ordinary skill in the art may be aware that units and algorithm steps in the examples described with reference to embodiments disclosed in this specification can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for convenience and brevity of description, for a specific working process of the foregoing apparatus and unit, refer to a corresponding process in the foregoing method embodiment. Details are not described herein.

In the several embodiments provided in this application, it should be understood that the disclosed apparatuses and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A security detection method, comprising:
obtaining (1400) a first data packet;
inputting (1402) the first data packet into a first security detection apparatus (1500) for security detection, to obtain a first security detection result;
obtaining (1403) a second data packet and inputting the second data packet into a second security detection apparatus (1500) for security detection if the first security detection result indicates that the first data packet poses a security threat, to obtain a second security detection result; and
forwarding (1404) the second data packet or executing a first security instruction based on the second security detection result, wherein the first security instruction is for controlling a vehicle (100) to perform a security operation,
**characterised in that**
obtaining the first data packet comprises obtaining the first data packet and a third data packet in a first time period;
wherein the method further comprises:
inputting the third data packet into the second security detection apparatus (1500) for security detection, to obtain a fourth security detection result; and
forwarding the third data packet or executing a second security instruction based on the fourth security detection result, wherein the second security instruction is for controlling the vehicle (100) to perform the security operation,
wherein a detection capability of the second security detection apparatus (1500) is higher than a detection capability of the first security detection apparatus (1500) and a detection speed of the first security detection apparatus (1500) is higher than a detection speed of the second security detection apparatus (1500).

2. The method according to claim 1, wherein the forwarding the second data packet or executing a first security instruction based on the second security detection result comprises:
sending the second data packet to a first server if the second security detection result indicates that the second data packet poses a security threat;
receiving a third security detection result sent by the first server, wherein the third security detection result indicates whether the second data packet poses the security threat; and
forwarding the second data packet or executing the first security instruction based on the third security detection result.

3. The method according to claim 2, wherein the forwarding the second data packet or executing the first security instruction based on the third security detection result comprises:
forwarding the second data packet if the third security detection result indicates that the second data packet does not pose the security threat; or
executing the first security instruction if the third security detection result indicates that the second data packet poses the security threat.

4. The method according to claim 1, wherein the forwarding the second data packet or executing a first security instruction based on the second security detection result comprises:
forwarding the second data packet if the second security detection result indicates that the second data packet does not pose a security threat; or
executing the first security instruction if the second security detection result indicates that the second data packet poses a security threat.

5. The method according to any one of claims 1 to 4, wherein the first security detection apparatus (1500) comprises a rule library, a security detection rule is stored in the rule library, and the method further comprises:
receiving security detection rule update information sent by a second server; and
updating the security detection rule in the rule library based on the security detection rule update information.

6. The method according to any one of claims 1 to 5, wherein the method further comprises:
forwarding the first data packet.

7. A security detection apparatus (1500), comprising:
an obtaining unit (1501), configured to obtain a first data packet;
a first security detection unit, configured to input the first data packet into a first security detection apparatus (1502) for security detection, to obtain a first security detection result, wherein
the obtaining unit (1501) is further configured to obtain a second data packet when the first security detection result indicates that the first data packet poses a security threat;
a second security detection unit, configured to input the second data packet into a second security detection apparatus (1503) for security detection, to obtain a second security detection result; and
a processing unit (1504), configured to forward the second data packet or execute a first security instruction based on the second security detection result, wherein the first security instruction is for controlling a vehicle (100) to perform a security operation,
**characterised in that**
the obtaining unit (1501) is configured to obtain the first data packet and a third data packet in a first time period; and
the second security detection unit is further configured to: input the third data packet into the second security detection apparatus (1503) for security detection, to obtain a fourth security detection result; and
forward the third data packet or execute a second security instruction based on the fourth security detection result, wherein the second security instruction is for controlling the vehicle (100) to perform the security operation, and
wherein a detection capability of the second security detection apparatus (1500) is higher than a detection capability of the first security detection apparatus (1500) and a detection speed of the first security detection apparatus (1502) is higher than a detection speed of the second security detection apparatus (1503).

8. The apparatus (1500) according to claim 7, wherein the apparatus further comprises a sending unit and a receiving unit, and the processing unit (1504) (1504) is specifically configured to:
if the second security detection result indicates that the second data packet poses a security threat, control the sending unit to send the second data packet to a first server;
control the receiving unit to receive a third security detection result sent by the first server, wherein the third security detection result indicates whether the second data packet poses the security threat; and
forward the second data packet or execute the first security instruction based on the third security detection result.

9. The apparatus (1500) according to claim 8, wherein the processing unit (1504) is specifically configured to:
if the third security detection result indicates that the second data packet does not pose the security threat, control the sending unit to forward the second data packet; or
execute the first security instruction if the third security detection result indicates that the second data packet poses the security threat.

10. The apparatus (1500) according to claim 7, wherein the apparatus (1500) further comprises a sending unit, and the processing unit (1504) is specifically configured to:
if the second security detection result indicates that the second data packet does not pose a security threat, control the sending unit to forward the second data packet; or
execute the first security instruction if the second security detection result indicates that the second data packet poses a security threat.

11. The apparatus (1500) according to any one of claims 7 to 10, wherein the first security detection apparatus (1502) comprises a rule library, and a security detection rule is stored in the rule library; and
the processing unit (1504) is further configured to update the security detection rule in the rule library based on security detection rule update information sent by a second server.

12. The apparatus (1500) according to any one of claims 7 to 11, wherein the apparatus further comprises the sending unit, wherein
the sending unit is configured to forward the first data packet.

13. A computer-readable storage medium, wherein the computer-readable medium stores program code, and when the program code is run on a computer, the computer is enabled to perform the method according to any one of claims 1 to 6.

## Patentansprüche

1. Sicherheitsdetektionsverfahren, das Folgendes umfasst:
Erhalten (1400) eines ersten Datenpakets;
Eingeben (1402) des ersten Datenpakets in eine erste Sicherheitsdetektionseinrichtung (1500) zur Sicherheitsdetektion, um ein erstes Sicherheitsdetektionsergebnis zu erhalten;
Erhalten (1403) eines zweiten Datenpakets und Eingeben des zweiten Datenpakets in eine zweite Sicherheitsdetektionseinrichtung (1500) zur Sicherheitsdetektion, wenn das erste Sicherheitsdetektionsergebnis angibt, dass das erste Datenpaket eine Sicherheitsbedrohung darstellt, um ein zweites Sicherheitsdetektionsergebnis zu erhalten; und
Weiterleiten (1404) des zweiten Datenpakets oder Ausführen einer ersten Sicherheitsanweisung basierend auf dem zweiten Sicherheitsdetektionsergebnis, wobei die erste Sicherheitsanweisung zum Steuern eines Fahrzeugs (100) zum Durchführen einer Sicherheitsoperation dient,
**dadurch gekennzeichnet, dass**
das Erhalten des ersten Datenpakets Erhalten des ersten Datenpakets und eines dritten Datenpakets in einem ersten Zeitraum umfasst;
wobei das Verfahren ferner Folgendes umfasst:
Eingeben des dritten Datenpakets in die zweite Sicherheitsdetektionseinrichtung (1500) zur Sicherheitsdetektion, um ein viertes Sicherheitsdetektionsergebnis zu erhalten; und
Weiterleiten des dritten Datenpakets oder Ausführen einer zweiten Sicherheitsanweisung basierend auf dem vierten Sicherheitsdetektionsergebnis, wobei die zweite Sicherheitsanweisung zum Steuern des Fahrzeugs (100) zum Durchführen der Sicherheitsoperation dient,
wobei eine Detektionsfähigkeit der zweiten Sicherheitsdetektionseinrichtung (1500) höher als eine Detektionsfähigkeit der ersten Sicherheitsdetektionseinrichtung (1500) ist und eine Detektionsgeschwindigkeit der ersten Sicherheitsdetektionseinrichtung (1500) höher als eine Detektionsgeschwindigkeit der zweiten Sicherheitsdetektionseinrichtung (1500) ist.

2. Verfahren nach Anspruch 1, wobei das Weiterleiten des zweiten Datenpakets oder das Ausführen einer ersten Sicherheitsanweisung basierend auf dem zweiten Sicherheitsdetektionsergebnis Folgendes umfasst:
Senden des zweiten Datenpakets an einen ersten Server, wenn das zweite Sicherheitsdetektionsergebnis angibt, dass das zweite Datenpaket eine Sicherheitsbedrohung darstellt;
Empfangen eines dritten Sicherheitsdetektionsergebnisses, das durch den ersten Server gesendet wird, wobei das dritte Sicherheitsdetektionsergebnis angibt, ob das zweite Datenpaket die Sicherheitsbedrohung darstellt; und
Weiterleiten des zweiten Datenpakets oder Ausführen der ersten Sicherheitsanweisung basierend auf dem dritten Sicherheitsdetektionsergebnis.

3. Verfahren nach Anspruch 2, wobei das Weiterleiten des zweiten Datenpakets oder das Ausführen der ersten Sicherheitsanweisung basierend auf dem dritten Sicherheitsdetektionsergebnis Folgendes umfasst:
Weiterleiten des zweiten Datenpakets, wenn das dritte Sicherheitsdetektionsergebnis angibt, dass das zweite Datenpaket nicht die Sicherheitsbedrohung darstellt; oder
Ausführen der ersten Sicherheitsanweisung, wenn das dritte Sicherheitsdetektionsergebnis angibt, dass das zweite Datenpaket die Sicherheitsbedrohung darstellt.

4. Verfahren nach Anspruch 1, wobei das Weiterleiten des zweiten Datenpakets oder das Ausführen einer ersten Sicherheitsanweisung basierend auf dem zweiten Sicherheitsdetektionsergebnis Folgendes umfasst:
Weiterleiten des zweiten Datenpakets, wenn das zweite Sicherheitsdetektionsergebnis angibt, dass das zweite Datenpaket keine Sicherheitsbedrohung darstellt; oder
Ausführen der ersten Sicherheitsanweisung, wenn das zweite Sicherheitsdetektionsergebnis angibt, dass das zweite Datenpaket eine Sicherheitsbedrohung darstellt.

5. Verfahren nach einem der Ansprüche 1 bis 4, wobei die erste Sicherheitsdetektionseinrichtung (1500) eine Regelbibliothek umfasst, eine Sicherheitsdetektionsregel in der Regelbibliothek gespeichert ist und das Verfahren ferner Folgendes umfasst:
Empfangen von Sicherheitsdetektionsregel-Aktualisierungsinformationen, die durch einen zweiten Server gesendet werden; und
Aktualisieren der Sicherheitsdetektionsregel in der Regelbibliothek basierend auf den Sicherheitsdetektionsregel-Aktualisierungsinformationen. (1500) (100)

6. Verfahren nach einem der Ansprüche 1 bis 5, wobei das Verfahren ferner Folgendes umfasst:
Weiterleiten des ersten Datenpakets.

7. Sicherheitsdetektionseinrichtung (1500), die Folgendes umfasst:
eine Erhalteeinheit (1501), ausgelegt zum Erhalten eines ersten Datenpakets;
eine erste Sicherheitsdetektionseinheit, ausgelegt zum Eingeben des ersten Datenpakets in eine erste Sicherheitsdetektionseinrichtung (1502) zur Sicherheitsdetektion, um ein erstes Sicherheitsdetektionsergebnis zu erhalten, wobei die Erhalteeinheit (1501) ferner ausgelegt ist zum Erhalten eines zweiten Datenpakets, wenn das erste Sicherheitsdetektionsergebnis angibt, dass das erste Datenpaket eine Sicherheitsbedrohung darstellt;
eine zweite Sicherheitsdetektionseinheit, ausgelegt zum Eingeben des zweiten Datenpakets in eine zweite Sicherheitsdetektionseinrichtung (1503) zur Sicherheitsdetektion, um ein zweites Sicherheitsdetektionsergebnis zu erhalten; und
eine Verarbeitungseinheit (1504), ausgelegt zum Weiterleiten des zweiten Datenpakets oder Ausführen einer ersten Sicherheitsanweisung basierend auf dem zweiten Sicherheitsdetektionsergebnis, wobei die erste Sicherheitsanweisung zum Steuern eines Fahrzeugs (100) zum Durchführen einer Sicherheitsoperation dient,
**dadurch gekennzeichnet, dass**
die Erhalteeinheit (1501) ausgelegt ist zum Erhalten des ersten Datenpakets und eines dritten Datenpakets in einer ersten Zeitperiode; und
die zweite Sicherheitsdetektionseinheit ferner ausgelegt ist zum Eingeben des dritten Datenpakets in die zweite Sicherheitsdetektionseinrichtung (1503) zur Sicherheitsdetektion, um ein viertes Sicherheitsdetektionsergebnis zu erhalten; und
Weiterleiten des dritten Datenpakets oder Ausführen einer zweiten Sicherheitsanweisung basierend auf dem vierten Sicherheitsdetektionsergebnis, wobei die zweite Sicherheitsanweisung zum Steuern des Fahrzeugs (100) zum Durchführen der Sicherheitsoperation dient, und
wobei eine Detektionsfähigkeit der zweiten Sicherheitsdetektionseinrichtung (1500) höher als eine Detektionsfähigkeit der ersten Sicherheitsdetektionseinrichtung (1500) ist und eine Detektionsgeschwindigkeit der ersten Sicherheitsdetektionseinrichtung (1502) höher als eine Detektionsgeschwindigkeit der zweiten Sicherheitsdetektionseinrichtung (1503) ist.

8. Einrichtung (1500) nach Anspruch 7, wobei die Einrichtung ferner eine Sendeeinheit und eine Empfangseinheit umfasst und die Verarbeitungseinheit (1504) (1504) insbesondere zu Folgendem ausgelegt ist:
wenn das zweite Sicherheitsdetektionsergebnis angibt, dass das zweite Datenpaket eine Sicherheitsbedrohung darstellt, Steuern der Sendeeinheit zum Senden des zweiten Datenpakets an einen ersten Server;
Steuern der Empfangseinheit zum Empfangen eines dritten Sicherheitsdetektionsergebnisses, das durch den ersten Server gesendet wird, wobei das dritte Sicherheitsdetektionsergebnis angibt, ob das zweite Datenpaket die Sicherheitsbedrohung darstellt; und
Weiterleiten des zweiten Datenpakets oder Ausführen der ersten Sicherheitsanweisung basierend auf dem dritten Sicherheitsdetektionsergebnis.

9. Einrichtung (1500) nach Anspruch 8, wobei die Verarbeitungseinheit (1504) insbesondere zu Folgendem ausgelegt ist:
wenn das dritte Sicherheitsdetektionsergebnis angibt, dass das zweite Datenpaket nicht die Sicherheitsbedrohung darstellt, Steuern der Sendeeinheit zum Weiterleiten des zweiten Datenpakets; oder
Ausführen der ersten Sicherheitsanweisung, wenn das dritte Sicherheitsdetektionsergebnis angibt, dass das zweite Datenpaket die Sicherheitsbedrohung darstellt.

10. Einrichtung (1500) nach Anspruch 7, wobei die Einrichtung (1500) ferner eine Sendeeinheit umfasst und die Verarbeitungseinheit (1504) insbesondere zu Folgendem ausgelegt ist:
wenn das zweite Sicherheitsdetektionsergebnis angibt, dass das zweite Datenpaket keine Sicherheitsbedrohung darstellt, Steuern der Sendeeinheit zum Weiterleiten des zweiten Datenpakets; oder
Ausführen der ersten Sicherheitsanweisung, wenn das zweite Sicherheitsdetektionsergebnis angibt, dass das zweite Datenpaket eine Sicherheitsbedrohung darstellt.

11. Einrichtung (1500) nach einem der Ansprüche 7 bis 10, wobei die erste Sicherheitsdetektionseinrichtung (1502) eine Regelbibliothek umfasst und eine Sicherheitsdetektionsregel in der Regelbibliothek gespeichert ist; und
die Verarbeitungseinheit (1504) ferner ausgelegt ist zum Aktualisieren der Sicherheitsdetektionsregel in der Regelbibliothek basierend auf Sicherheitsdetektionsregel-Aktualisierungsinformationen, die durch einen zweiten Server gesendet werden. (1501)

12. Einrichtung (1500) nach einem der Ansprüche 7 bis 11, wobei die Einrichtung ferner die Sendeeinheit umfasst, wobei
die Sendeeinheit zum Weiterleiten des ersten Datenpakets ausgelegt ist.

13. Computerlesbares Speichermedium, wobei das computerlesbare Medium einen Programmcode speichert und eine Ausführung des Programmcodes auf einem Computer ermöglicht, dass der Computer das Verfahren nach einem der Ansprüche 1 bis 6 durchführt.

## Revendications

1. Procédé de détection de sécurité, comprenant :
l'obtention (1400) d'un premier paquet de données ;
l'entrée (1402) du premier paquet de données dans un premier appareil de détection de sécurité (1500) pour une détection de sécurité, afin d'obtenir un premier résultat de détection de sécurité ;
l'obtention (1403) d'un deuxième paquet de données et l'entrée du deuxième paquet de données dans un deuxième appareil de détection de sécurité (1500) pour une détection de sécurité si le premier résultat de détection de sécurité indique que le premier paquet de données constitue une menace de sécurité, afin d'obtenir un deuxième résultat de détection de sécurité ; et
le transfert (1404) du deuxième paquet de données ou l'exécution d'une première instruction de sécurité sur la base du deuxième résultat de détection de sécurité, la première instruction de sécurité étant destinée à commander à un véhicule (100) de réaliser une opération de sécurité,
**caractérisé en ce que**
l'obtention du premier paquet de données comprend l'obtention du premier paquet de données et d'un troisième paquet de données dans une première période de temps ;
le procédé comprenant en outre :
l'entrée du troisième paquet de données dans le deuxième appareil de détection de sécurité (1500) pour une détection de sécurité, afin d'obtenir un quatrième résultat de détection de sécurité ; et
le transfert du troisième paquet de données ou l'exécution d'une deuxième instruction de sécurité sur la base du quatrième résultat de détection de sécurité, la deuxième instruction de sécurité étant destinée à commander au véhicule (100) de réaliser l'opération de sécurité,
une capacité de détection du deuxième appareil de détection de sécurité (1500) étant supérieure à une capacité de détection du premier appareil de détection de sécurité (1500) et une vitesse de détection du premier appareil de détection de sécurité (1500) étant supérieure à une vitesse de détection du deuxième appareil de détection de sécurité (1500).

2. Procédé selon la revendication 1, le transfert du deuxième paquet de données ou l'exécution d'une première instruction de sécurité sur la base du deuxième résultat de détection de sécurité comprenant :
l'envoi du deuxième paquet de données à un premier serveur si le deuxième résultat de détection de sécurité indique que le deuxième paquet de données constitue une menace de sécurité ;
la réception d'un troisième résultat de détection de sécurité envoyé par le premier serveur, le troisième résultat de détection de sécurité indiquant si le deuxième paquet de données constitue la menace de sécurité ; et
le transfert du deuxième paquet de données ou l'exécution de la première instruction de sécurité sur la base du troisième résultat de détection de sécurité.

3. Procédé selon la revendication 2, le transfert du deuxième paquet de données ou l'exécution de la première instruction de sécurité sur la base du troisième résultat de détection de sécurité comprenant :
le transfert du deuxième paquet de données si le troisième résultat de détection de sécurité indique que le deuxième paquet de données ne constitue pas une menace de sécurité ; ou
l'exécution de la première instruction de sécurité si le troisième résultat de détection de sécurité indique que le deuxième paquet de données constitue la menace de sécurité.

4. Procédé selon la revendication 1, le transfert du deuxième paquet de données ou l'exécution d'une première instruction de sécurité sur la base du deuxième résultat de détection de sécurité comprenant :
le transfert du deuxième paquet de données si le deuxième résultat de détection de sécurité indique que le deuxième paquet de données ne constitue pas une menace de sécurité ; ou
l'exécution de la première instruction de sécurité si le deuxième résultat de détection de sécurité indique que le deuxième paquet de données constitue une menace de sécurité.

5. Procédé selon l'une quelconque des revendications 1 à 4, le premier appareil de détection de sécurité (1500) comprenant une bibliothèque de règles, une règle de détection de sécurité étant stockée dans la bibliothèque de règles, et le procédé comprenant en outre :
la réception d'informations de mise à jour de règle de détection de sécurité envoyées par un deuxième serveur ; et
la mise à jour de la règle de détection de sécurité dans la bibliothèque de règles sur la base des informations de mise à jour de règle de détection de sécurité. (1500) (100)

6. Procédé selon l'une quelconque des revendications 1 à 5, le procédé comprenant en outre : le transfert du premier paquet de données.

7. Appareil de détection de sécurité (1500), comprenant :
une unité d'obtention (1501), configurée pour obtenir un premier paquet de données ;
une première unité de détection de sécurité, configurée pour entrer le premier paquet de données dans un premier appareil de détection de sécurité (1502) pour une détection de sécurité, afin d'obtenir un premier résultat de détection de sécurité, l'unité d'obtention (1501) étant en outre configurée pour obtenir un deuxième paquet de données lorsque le premier résultat de détection de sécurité indique que le premier paquet de données constitue une menace de sécurité ;
une deuxième unité de détection de sécurité, configurée pour entrer le deuxième paquet de données dans un deuxième appareil de détection de sécurité (1503) pour une détection de sécurité, afin d'obtenir un deuxième résultat de détection de sécurité ; et
une unité de traitement (1504), configurée pour transférer le deuxième paquet de données ou exécuter une première instruction de sécurité sur la base du deuxième résultat de détection de sécurité, la première instruction de sécurité étant destinée à commander à un véhicule (100) de réaliser une opération de sécurité,
**caractérisé en ce que**
l'unité d'obtention (1501) est configurée pour obtenir le premier paquet de données et un troisième paquet de données dans une première période de temps ; et
la deuxième unité de détection de sécurité est en outre configurée pour : entrer le troisième paquet de données dans le deuxième appareil de détection de sécurité (1503) pour une détection de sécurité, afin d'obtenir un quatrième résultat de détection de sécurité ; et
transférer le troisième paquet de données ou exécuter une deuxième instruction de sécurité sur la base du quatrième résultat de détection de sécurité, la deuxième instruction de sécurité étant destinée à commander au véhicule (100) de réaliser l'opération de sécurité, et
une capacité de détection du deuxième appareil de détection de sécurité (1500) étant supérieure à une capacité de détection du premier appareil de détection de sécurité (1500) et une vitesse de détection du premier appareil de détection de sécurité (1502) étant supérieure à une vitesse de détection du deuxième appareil de détection de sécurité (1503).

8. Appareil (1500) selon la revendication 7, l'appareil comprenant en outre une unité émettrice et une unité réceptrice, et l'unité de traitement (1504) (1504) étant spécifiquement configurée pour :
si le deuxième résultat de détection de sécurité indique que le deuxième paquet de données constitue une menace de sécurité, commander à l'unité émettrice d'envoyer le deuxième paquet de données à un premier serveur ;
commander à l'unité réceptrice de recevoir un troisième résultat de détection de sécurité envoyé par le premier serveur, le troisième résultat de détection de sécurité indiquant si le deuxième paquet de données constitue la menace de sécurité ; et
transférer le deuxième paquet de données ou exécuter la première instruction de sécurité sur la base du troisième résultat de détection de sécurité.

9. Appareil (1500) selon la revendication 8, l'unité de traitement (1504) étant spécifiquement configurée pour :
si le troisième résultat de détection de sécurité indique que le deuxième paquet de données ne constitue pas une menace de sécurité, commander à l'unité émettrice de transférer le deuxième paquet de données ; ou
exécuter la première instruction de sécurité si le troisième résultat de détection de sécurité indique que le deuxième paquet de données constitue la menace de sécurité.

10. Appareil (1500) selon la revendication 7, l'appareil (1500) comprenant en outre une unité émettrice, et l'unité de traitement (1504) étant spécifiquement configurée pour :
si le deuxième résultat de détection de sécurité indique que le deuxième paquet de données ne constitue pas une menace de sécurité, commander à l'unité émettrice de transférer le deuxième paquet de données ; ou
exécuter la première instruction de sécurité si le deuxième résultat de détection de sécurité indique que le deuxième paquet de données constitue une menace de sécurité.

11. Appareil (1500) selon l'une quelconque des revendications 7 à 10, le premier appareil de détection de sécurité (1502) comprenant une bibliothèque de règles, et une règle de détection de sécurité étant stockée dans la bibliothèque de règles ; et
l'unité de traitement (1504) étant en outre configurée pour mettre à jour la règle de détection de sécurité dans la bibliothèque de règles sur la base des informations de mise à jour de règle de détection de sécurité envoyées par un deuxième serveur. (1501)

12. Appareil (1500) selon l'une quelconque des revendications 7 à 11, l'appareil comprenant en outre l'unité émettrice,
l'unité émettrice étant configurée pour transférer le premier paquet de données.

13. Support de stockage lisible par ordinateur, le support lisible par ordinateur stockant un code de programme, et lorsque le code de programme est exécuté sur un ordinateur, l'ordinateur étant autorisé à réaliser le procédé selon l'une quelconque des revendications 1 à 6.
